(19) Europäisches Patentamt
European Patent Office
Office européen des brevets

(11) EP 2 285 852 B1

(12) # FASCICULE DE BREVET EUROPEEN

(45) Date de publication et mention de la délivrance du brevet:
**04.11.2015 Bulletin 2015/45**

(21) Numéro de dépôt: **09738112.3**

(22) Date de dépôt: **27.04.2009**

(51) Int Cl.:
***C08F 297/04*** *(2006.01)*
***C08F 8/42*** *(2006.01)*
***B60C 1/00*** *(2006.01)*
***C08C 19/44*** *(2006.01)*
***C08L 15/00*** *(2006.01)*
***C08L 53/02*** *(2006.01)*

(86) Numéro de dépôt international:
**PCT/EP2009/055061**

(87) Numéro de publication internationale:
**WO 2009/133068 (05.11.2009 Gazette 2009/45)**

(54) **MELANGE ELASTOMERIQUE COMPRENANT MAJORITAIREMENT UN ELASTOMERE DIENIQUE COUPLE PAR UN GROUPE AMINO-ALCOXYSILANE, COMPOSITION DE CAOUTCHOUC LE COMPRENANT ET LEURS PROCEDES D'OBTENTION**

ELASTOMERMISCHUNG, HAUPTSÄCHLICH UMFASSEND EIN DIENELASTOMER, DAS DURCH EINE AMINOALKOXYSILANGRUPPE GEKUPPELT IST, KAUTSCHUKZUSAMMENSETZUNG DAMIT UND HERSTELLUNGSVERFAHREN DAFÜR

ELASTOMER MIXTURE MAINLY COMPRISING A DIENE ELASTOMER COUPLED BY AN AMINO-ALKOXYSILANE GROUP, RUBBER COMPOSITION INCLUDING SAME AND METHODS FOR OBTAINING SAME

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **29.04.2008 FR 0852868**

(43) Date de publication de la demande:
**23.02.2011 Bulletin 2011/08**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **CHABOCHE, Philippe**
  **F-63000 Clermont-Ferrand (FR)**
- **FAVROT, Jean-Michel**
  **F-63800 Cournon d'Auvergne (FR)**
- **BARBOTIN, Fanny**
  **F-38560 Jarrie (FR)**
- **DE LANDTSHEER, Stéphanie**
  **115184 MOSCOU (RU)**
- **SEEBOTH, Nicolas**
  **F-63000 Clermont-Ferrand (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A- 1 457 501**
**WO-A-03/037946**
**FR-A- 2 744 127**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 285 852 B1

Printed by Jouve, 75001 PARIS (FR)

## Description

La présente invention est relative à un élastomère diénique modifié majoritairement couplé par un groupe alcoxysilane portant une fonction amine tertiaire ou secondaire ainsi qu'une composition de caoutchouc renforcée, utilisable notamment pour la fabrication de pneumatiques, comprenant cet élastomère et possédant des propriétés dynamiques et mécaniques améliorées à l'état vulcanisé ainsi qu'une mise en oeuvre à l'état cru améliorée.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant l'aptitude à la mise en oeuvre des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Les demandes de brevets EP-A-0 590 491 et EP-A-0 593 049 décrivent par exemple des polymères portant des fonctions amines permettant une meilleure interaction entre le polymère et le noir de carbone.

Dans le cadre de mélanges contenant une charge inorganique renforçante, il a notamment été proposé d'utiliser des polymères diéniques fonctionnalisés par des dérivés alcoxysilanes.

A titre d'illustration de cet art antérieur relatif à des charges inorganiques renforçantes, on peut par exemple citer le brevet américain US-A-5 066 721, qui décrit une composition de caoutchouc comprenant un polymère diénique fonctionnalisé par un alcoxysilane ayant au moins un reste alcoxyle non hydrolysable en mélange avec de la silice. On peut également citer la demande de brevet EP-A-0 299 074 qui décrit des polymères fonctionnalisés comportant des fonctions alcoxysilanes en bout de chaîne. Ces polymères fonctionnalisés ont été décrits dans l'art antérieur comme efficaces pour réduire l'hystérèse et améliorer la tenue à l'abrasion, cependant leurs propriétés restent insuffisantes pour permettre la mise en oeuvre de ces polymères dans des compositions destinées à constituer des bandes de roulement de pneumatiques.

Il a également été proposé de combiner la fonctionnalisation par des fonctions amine à la fonctionnalisation par des fonctions alcoxysilanes. Ainsi, le brevet EP 0 992 537 décrit une composition de caoutchouc qui comprend un élastomère étendu modifié en bout de chaîne par une fonction alcoxysilane et portant à l'autre extrémité ou le long de sa chaîne une ou plusieurs fonctions amine.

Par ailleurs, il a également été proposé d'améliorer les propriétés des compositions de caoutchouc en utilisant des élastomères fonctionnalisés en bout de chaîne par des fonctions alcoxysilanes portant un groupement amine, que ce soit en mélange noir, silice ou hybride. Divers procédés de fonctionnalisation ont ainsi été décrits, mettant en jeu des agents de fonctionnalisation de type alcoxysilane portant un groupement amine. On peut citer, par exemple, le brevet US 5 015 692 ou encore le brevet EP 0 341 496 qui proposent un procédé de fonctionnalisation d'élastomères par des composés tels que des composés phosphorés, nitrés, des aminosilanes, des acrylamides, des aminovinylsilane, le cas échéant combiné à un couplage ou un étoilage avec un composé à base de silicium ou d'étain, en vue d'améliorer l'élasticité au choc de compositions de caoutchouc les contenant. Ces brevets décrivent notamment des compositions de caoutchouc renforcées au noir de carbone contenant un polybutadiène fonctionnalisé en bout de chaîne par un alcoxysilane portant un groupement amine. La demande de brevet US 2005/0203251 décrit quant à elle une composition de caoutchouc renforcée par de la silice contenant un élastomère fonctionnalisé en bout de chaîne par un alcoxysilane portant un groupement amine tertiaire.

La fonctionnalisation des élastomères en bout de chaîne par des fonctions alcoxysilanes portant un groupement amine, cyclique ou non, est également décrite dans la demande de brevet JP 2001158834. La composition de caoutchouc contenant ce type d'élastomère fonctionnalisé est déclinée en plusieurs variantes qui font l'objet des demandes de brevet JP 2001158835, JP 2001158836 et JP 2001158837.

La fonctionnalisation en bout de chaîne d'un élastomère par réaction avec un composé alcoxysilane porteur d'un groupement amine cyclique insaturée, tel que le groupement pyridyle, est illustrée dans la demande de brevet JP 2005232367.

La demande de brevet JP 2001131230 traite de la fonctionnalisation en bout de chaîne d'élastomères portant à l'autre extrémité de chaîne une fonction amine, par différents composés alcoxysilanes porteurs de groupements amine tertiaire, cyclique ou non. D'autres demandes de brevets ou brevets traitent de divers procédés de fonctionnalisation par exemple par des composés alcoxysilanes portant un groupement imine telle la demande de brevet JP 2001131340 et le brevet EP 1 113 024 (dont l'élastomère est utilisé dans des variantes de compositions faisant l'objet des demandes

JP 2001131343, JP 2001131344, JP 2001131345 et JP 2005171034) ou encore par des composés de type azalcoxysilane cyclique telle que dans la demande internationale WO 2006076629, pour préparer des élastomères fonctionnalisés en bout de chaîne par des fonctions alcoxysilanes portant un groupement amine secondaire.

Néanmoins, il s'avère que les compositions contenant des élastomères ainsi modifiés, qu'il s'agisse de mélange noir, silice ou hybride, ne présentent pas toujours une mise en oeuvre acceptable et une hystérèse satisfaisante pour une utilisation en bande de roulement pour pneumatique.

C'est la raison pour laquelle des recherches ont été menées sur d'autres réactions de fonctionnalisation, en vue de l'obtention de compositions de caoutchouc possédant un compromis mise en oeuvre à cru/hystérèse amélioré.

Le but de la présente invention est donc de proposer une telle composition. Notamment, un objectif est de proposer un élastomère fonctionnalisé interagissant de manière satisfaisante avec la charge renforçante d'une composition de caoutchouc le contenant afin d'en améliorer les propriétés mécaniques et dynamiques, tout en conservant une mise en oeuvre à cru satisfaisante, en vue notamment d'une utilisation en bande de roulement pour pneumatique.

Ce but est atteint en ce que les inventeurs viennent de découvrir de manière surprenante au cours de leurs recherches que le couplage d'élastomères par des fonctions alcoxysilanes portant un groupement amine tertiaire ou secondaire confère aux compositions les contenant une amélioration remarquable et inattendue du compromis mise en oeuvre à cru/hystérèse. Ces élastomères couplés permettent de réduire d'une manière significative pour les compositions de caoutchouc les contenant, à l'état réticulé, le niveau d'hystérèse et d'améliorer les propriétés mécaniques tout en optimisant leur aptitude à la mise en oeuvre à l'état non réticulé.

En effet, d'une part, la mise en oeuvre à cru de telles compositions est similaire à celle de composition contenant des élastomères non fonctionnalisés, voire même améliorée. D'autre part, les propriétés mécaniques et dynamiques de telles compositions sont largement améliorées par rapport à celles de compositions contenant des élastomères fonctionnalisés en bout de chaîne notamment par rapport à celles de compositions contenant des élastomères fonctionnalisés en bout de chaîne par des fonctions alcoxysilanes portant un groupement amine.

L'invention a donc pour objet un mélange élastomérique, issu de la modification d'un élastomère diénique par un agent de couplage introduisant dans la chaîne élastomérique un groupe alcoxysilane portant une fonction amine tertiaire ou secondaire, ledit mélange comprenant majoritairement (i.e., pour plus de 50% en masse) l'élastomère diénique couplé par le groupe alcoxysilane portant une fonction amine tertiaire ou secondaire lié à l'élastomère diénique par l'intermédiaire de l'atome de silicium. Le procédé de préparation de ce mélange fait également l'objet de l'invention. Ce mélange élastomérique est également désigné dans le texte par l'expression "élastomère diénique majoritairement couplé par un groupe alcoxysilane portant une fonction amine tertiaire ou secondaire".

L'invention a également pour objet une composition de caoutchouc renforcée à base au moins d'une charge renforçante et d'une matrice élastomère comprenant au moins un élastomère diénique majoritairement couplé par un groupe alcoxysilane portant une fonction amine tertiaire ou secondaire.

La présente invention concerne également un procédé de préparation d'une composition de caoutchouc renforcée à base au moins d'une charge renforçante et d'une matrice élastomère comprenant au moins un élastomère diénique majoritairement couplé par un groupe alcoxysilane portant une fonction amine tertiaire ou secondaire lié à l'élastomère diénique par l'atome de silicium.

Dans le texte les expressions "alcoxysilane portant une fonction amine tertiaire ou secondaire", " amine-alcoxysilane" et "amino-alcoxysilane" ont la même signification et pourront être utilisées indifféremment, l'une comme l'autre. Dans le cadre de l'invention il convient de noter que le groupement amine n'est pas une amine primaire.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention a donc pour objet premier un mélange élastomérique issu de la modification d'un élastomère diénique par un agent de couplage introduisant dans la chaîne élastomérique un groupe amino-alcoxysilane, ce mélange comprenant, par rapport à la masse totale du mélange issu de cette modification, plus de 50% en masse d'élastomère diénique couplé par un groupe amino-alcoxysilane. En effet, lors d'une telle modification d'un élastomère diénique, plusieurs espèces élastomériques sont recouvrées (élastomère fonctionnalisé en bout de chaîne, élastomère non fonctionnalisé, élastomère couplé...) formant un mélange élastomérique. De préférence, cet élastomère diénique couplé par un groupe amino-alcoxysilane est présent dans ce mélange en une quantité d'au moins 65% en masse, encore plus préférentiellement 75% en masse, par rapport à la masse totale du mélange élastomérique.

Toujours selon l'invention, on entend par élastomère diénique couplé par un groupe amino-alcoxysilane, un élastomère diénique possédant le groupe amino-alcoxysilane au sein de sa chaîne polymérique, notamment en milieu

de chaîne, l'atome de silicium de ce groupe amino-alcoxysilane liant les deux morceaux de la chaîne de l'élastomère diénique.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc. L'élastomère diénique de la composition conforme à l'invention est choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène et d'un monomère vinylaromatique, plus particulièrement le copolymère de butadiène-styrène (SBR), sont particulièrement préférés.

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon une mise en oeuvre de l'invention, l'élastomère diénique couplé, majoritaire dans le mélange élastomérique, peut être représenté par l'une des formules I, II ou III:

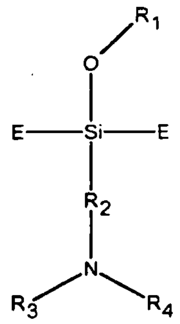

Formule (I)

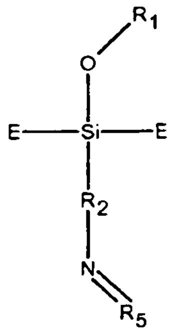

Formule (II)

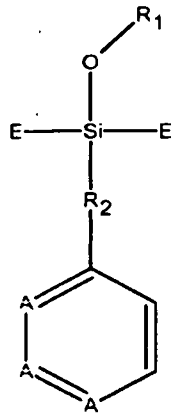

Formule (III)

dans lesquelles,

- Le symbole E désigne l'élastomère diénique tel que défini plus haut,
- $R_1$ désigne un radical alkyle, linéaire ou ramifié, en $C_1$ - $C_{10}$, cycloalkyle en $C_5$-$C_{18}$, aryle en $C_6$ - $C_{18}$ ou aralkyle en $C_7$ - $C_{18}$, de préférence alkyle en $C_1$-$C_4$, plus préférentiellement un radical méthyle ou éthyle
- $R_2$ est un dérivé hydrocarboné divalent, linéaire ou ramifié, d'alkyle en $C_1$ - $C_{10}$, d'aryle en $C_6$ - $C_{18}$ ou d'aralkyle en $C_7$ - $C_{18}$, de préférence un radical alkylène en $C_1$ - $C_{10}$, plus préférentiellement propane-1,3-diyl,
- dans la formule (I), $R_3$ et $R_4$, identiques ou différents, représentent un atome d'hydrogène ou un radical alkyl en $C_1$ - $C_{10}$, de préférence alkyle en $C_1$-$C_4$, plus préférentiellement un radical méthyle ou éthyle, sous réserve que lorsque l'un de $R_3$ et $R_4$ représente un atome d'hydrogène l'autre soit différent, ou alors $R_3$ et $R_4$ forment avec N auquel ils sont liés un hétérocycle contenant un atome d'azote et au moins un atome de carbone, de préférence de 2 à 6 atomes de carbone,
- dans la formule (II), $R_5$ représente un radical alkylidène, linéaire ou ramifié, en $C_1$- $C_{10}$, de préférence alkylidene en $C_2$-$C_6$, plus préférentiellement un radical alkylidène en $C_4$-$C_6$, linéaire ou ramifié; selon une variante de l'invention, $R_5$ désigne un radical alkylidène ramifié en $C_3$-$C_6$, de préférence le radical 3-(1,3-dimethylbutylidène),
- dans la formule (III), les symboles A désignent, indépendamment les uns des autres, un atome d'azote ou un atome de carbone, sous réserve que l'un au moins des symboles A désigne un atome d'azote; selon une variante de l'invention un seul A désigne un atome d'azote, de préférence en position méta ou para du cycle, plus préférentiellement en position para du cycle.

L'élastomère diénique majoritairement couplé par un groupe amino-alcoxysilane lié à l'élastomère diénique par l'atome de silicium, peut être préparé selon un procédé qui consiste dans un premier temps en une polymérisation anionique d'au moins un monomère diénique conjugué, tel que défini plus haut, en présence d'un initiateur, puis dans un deuxième temps en la réaction du polymère vivant ainsi obtenu sur un agent de couplage spécifique. Ce procédé fait également l'objet de l'invention.

En tant qu'initiateur de polymérisation, on peut utiliser tout initiateur anionique monofonctionnel connu. Toutefois un initiateur contenant un métal alcalin tel que le lithium est utilisé à titre préférentiel. Comme initiateurs organolithiens conviennent notamment ceux comportant une liaison carbone-lithium. Des composés représentatifs sont les organolithiens aliphatiques tels que l'éthyllithium, le n-butyllithium (n-BuLi), l'isobutyllithium, etc., les amidures de lithium obtenus à partir d'une amine secondaire cyclique, telle que la pyrrolidine et l'hexaméthylèneimine, et solubles dans un solvant hydrocarboné sans utilisation d'un agent de solvatation sont hautement préférés.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20 °C et 150 °C et de préférence voisine de 30 °C à 110 °C.

La réaction de couplage du polymère diénique vivant, obtenu à l'issue de la première étape, peut se dérouler à une température comprise entre - 20°C et 100 °C, par addition sur les chaînes polymères vivantes ou inversement d'un agent de couplage non polymérisable susceptible de former un groupe amino-alcoxysilane liant deux chaînes élastomériques par son atome de silicium. Cet agent de couplage non polymérisable permet notamment d'obtenir les

structures de formules I, II et III décrites plus haut. Il peut s'agir par exemple d'un composé amino-trialkoxysilane.

On peut citer par exemple à titre d'agent de couplage les N,N-dialkylaminopropyltrialcoxysilanes, les azadialcoxysilanes cycliques tels que les N-alkyl-aza-dialcoxysilacycloalcane, les 2-pyridylethyltrialcoxysilanes, les 3-carbazolethyltrialcoxysilanes, les 3-alkylideneaminopropyltrialcoxysilanes, les N-trialcoxysilylpropylmorpholine. Les substituants alkyle, alkylidène et alcoxy de ces agents sont linéaires ou ramifiés et possèdent généralement entre 1 et 18 atomes de carbone, de préférence entre 1 et 10, voire entre 1 et 8.

Préférentiellement, l'agent de couplage est choisi parmi le 3-(N,N-dimethylaminopropyl)trimethoxysilane de numéro CAS [2530-86-1], le 2-(4-pyridylethyl)triethoxysilane de numéro CAS [98299-74-2], le 2-[2-(trimethoxysilyl)ethyl]pyridine de numéro CAS [27326-65-4], le 3-(1,3-dimethylbutylidene)aminopropyltriethoxysilane de numéro CAS [198567-47-4], le N-n-butyl-aza-2,2-dimethoxysilacyclopentane de numéro CAS [618914-44-6]. Plus préférentiellement encore l'agent de couplage est le 3-(N,N-dimethylaminopropyl) trimethoxysilane.

Le mélangeage peut être réalisé par tout moyen approprié notamment à l'aide de tout mélangeur disposant d'une agitation de type statique et/ou tout mélangeur dynamique de type parfaitement agité connu par l'homme de l'art. Le temps de réaction entre le polymère diénique vivant et l'agent de couplage peut être compris entre 10 secondes et 2 heures.

Pour la réaction de couplage, le rapport molaire entre l'agent de couplage et le métal de l'initiateur des chaînes polymères vivantes est de 0,3 à 0,8, préférentiellement de 0,4 à 0,65 et encore plus préférentiellement de 0,45 à 0,55.

Un autre objet de l'invention est une composition de caoutchouc renforcée à base d'au moins une charge renforçante et une matrice élastomère comprenant au moins un élastomère diénique majoritairement couplé par un groupe amino-alcoxysilane tel que décrit plus haut.

La composition de caoutchouc renforcée selon l'invention peut se présenter à l'état réticulé ou à l'état non réticulé, autrement dit réticulable.

Il doit être entendu que la composition de l'invention peut comprendre un ou plusieurs de ces élastomères diéniques majoritairement couplés par un groupe amino-alcoxysilane.

Ainsi, l'élastomère diénique majoritairement couplé par un groupe amino-alcoxysilane lié à l'élastomère diénique par l'atome de silicium, peut être, selon l'invention, utilisé seul dans la composition ou en coupage avec tout élastomère diénique conventionnel, qu'il soit étoilé, couplé, fonctionnalisé ou non, avec tout élastomère synthétique autre que diénique, voire avec tout polymère autre qu'élastomère, par exemple un polymère thermoplastique, qui est conventionnellement utilisé dans les pneumatiques.

On notera que l'amélioration des propriétés de la composition selon l'invention sera d'autant plus élevée que la proportion du ou des élastomères différents de ceux de l'invention dans cette composition sera plus réduite. C'est pourquoi, selon une variante préférentielle de l'invention, la composition de caoutchouc renforcée est à base d'une matrice élastomère comprenant à titre majoritaire l'élastomère diénique majoritairement couplé par un groupe amino-alcoxysilane lié à l'élastomère diénique par l'atome de silicium. Lorsque l'élastomère conventionnel utilisé en coupage est du caoutchouc naturel et/ou un ou plusieurs polymères diéniques non fonctionnalisés comme par exemple les polybutadiènes, les polyisoprènes, les copolymères butadiène- styrène ou butadiène-styrène-isoprène, cet élastomère peut alors être présent entre 1 a 70 parties en poids pour 100 parties d'élastomère diénique majoritairement couplé par un groupe amino-alcoxysilane. Plus préférentiellement, cette matrice est uniquement constituée de cet élastomère diénique majoritairement couplé par un groupe amino-alcoxysilane. Lorsque l'élastomère conventionnel utilisé en coupage est un élastomère diénique étoilé, couplé ou fonctionnalisé avec un autre agent que celui permettant d'obtenir l'élastomère diénique majoritairement couplé par un groupe amino-alcoxysilane, cet élastomère peut, selon une mise en oeuvre de l'invention être présent a raison de 1 à 100 parties en poids pour 100 parties en poids d'élastomère diénique majoritairement couplé par un groupe amino-alcoxysilane.

Ainsi, selon une autre variante de l'invention, on peut également prévoir un étoilage supplémentaire de l'élastomère diénique majoritairement couplé par un groupe amino-alcoxysilane. Cette variante est avantageusement mise en oeuvre afin de diminuer le fluage à cru de la matrice élastomère. Le procédé de préparation de l'élastomère diénique majoritairement couplé par un groupe amino-alcoxysilane peut alors comprendre une étape d'étoilage par réaction avec un agent d'étoilage connu en soi par exemple à base d'étain ou de silicium.

La composition de caoutchouc de l'invention comprend, outre au moins une matrice élastomère comprenant un élastomère diénique majoritairement couplé possédant en milieu de chaîne un groupe amino-alcoxysilane lié à l'élastomère diénique par l'atome de silicium, tel que décrit plus haut, au moins une charge renforçante.

On peut utiliser tout type de charge renforçante connue pour ses capacités à renforcer une composition de caoutchouc utilisable pour la fabrication de bandes de roulement de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM),

comme par exemple les noirs N115, N134, N234, N326, N330, N339, N347, N375. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793, ou encore les charges organiques de polyvinyl non aromatique fonctionnalisé telles que décrites dans les demandes WO-A-2008/003434 et WO-A-2008/003435.

Par "charge inorganique renforçante", doit être entendu dans la présente demande, par définition, toute charge inorganique ou minérale quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices "Ultrasil 7000" et "Ultrasil 7005" de la société Degussa, les silices "Zeosil 1165MP", "1135MP" et "1115MP" de la société Rhodia, la silice "Hi-Sil EZ150G" de la société PPG, les silices "Zeopol 8715", "8745" et "8755" de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De manière préférentielle, le taux de charge renforçante totale (noir de carbone et/ou charge inorganique renforçante telle que silice) est compris entre 50 et 200 pce, plus préférentiellement entre 60 et 140 pce, et encore plus préférentiellement entre 70 et 130 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneumatique moto, un pneumatique pour véhicule de tourisme ou pour véhicule utilitaire tel que Poids lourd.

Selon une variante de l'invention, on utilise une charge renforçante comportant une charge inorganique renforçante selon une fraction massique comprise entre 50 % à 100 %, particulièrement de la silice, et optionnellement de la silice ou une autre charge inorganique.

Selon une autre variante de l'invention, notamment lorsque la composition est destinée à la fabrication de bande de roulement pour pneumatique de véhicule utilitaire tel que Poids lourd, on utilise une charge renforçante comportant une charge organique renforçante selon une fraction massique allant de 50 % à 100 %, particulièrement du noir de carbone, et optionnellement de la silice ou une autre charge inorganique.

Selon une variante de réalisation de l'invention, on utilise une charge renforçante comportant entre 50 et 150 pce, plus préférentiellement entre 50 et 120 pce de charge inorganique, particulièrement de silice, et optionnellement du noir de carbone ; le noir de carbone, lorsqu'il est présent, est utilisé dans cette variante de préférence à un taux inférieur à 30 pce, plus préférentiellement inférieur à 20 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650). Conviennent en particulier, sans que la définition ci-après soit limitative, des silanes polysulfurés dits "symétriques" répondant à la formule générale (I) suivante:

(I) $Z - A' - Sx - A' - Z,$

dans laquelle:

- x est un entier de 2 à 8 (de préférence de 2 à 5) ;
- A' est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

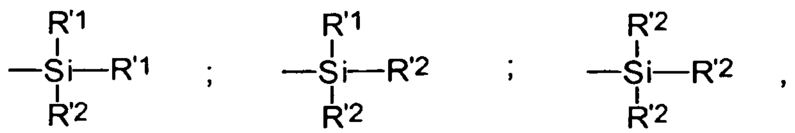

dans lesquelles:

- les radicaux R'1, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux R'2, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupements fonctionnels azo-dicarbonyle, tels que décrits par exemple dans les demandes de brevet WO 2006/125532, WO 2006/125533, WO 2006/125534.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce, plus préférentiellement de 3 à 10 pce, en particulier de 4 à 7 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Les compositions de caoutchouc conformes à l'invention peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

Les compositions de l'invention peuvent également comporter, à titre d'agent plastifiant préférentiel non aromatique ou très faiblement aromatique, au moins un composé choisi dans le groupe constitué par les huiles naphténiques, paraffiniques, huiles MES, huiles TDAE, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés. Le taux global

d'un tel agent plastifiant préférentiel est de préférence compris entre 10 et 100 pce, plus préférentiellement compris entre 10 et 80 pce, notamment dans un domaine de 20 à 50 pce.

L'invention a également pour objet un procédé de préparation d'une composition de caoutchouc renforcée conforme à l'invention. Ce procédé comprend :

(i) la réalisation, à une température maximale comprise entre 130 °C et 200 °C, d'un premier temps de travail thermomécanique (parfois qualifié de phase " non productive ") des constituants de base nécessaires, à l'exception du système de réticulation, de ladite composition comprenant l'élastomère diénique majoritairement couplé par un groupe amino-alcoxysilane lié à l'élastomère diénique par l'atome de silicium, et une charge renforçante, à l'exception d'un système de réticulation, puis

(ii) la réalisation, à une température inférieure à ladite température maximale dudit premier temps, de préférence inférieure à 120 °C, d'un second temps de travail mécanique au cours duquel est incorporé ledit système de réticulation.

La composition de caoutchouc ainsi obtenue peut ensuite être extrudée ou calandrée de manière connue en soi, sous la forme désirée, pour fabriquer des semi-finis tels que des bandes de roulement.

Ce procédé peut également comprendre, préalablement à la réalisation des étapes (i) et (ii) précitées, les étapes de la préparation de l'élastomère diénique majoritairement couplé par un groupe amino-alcoxysilane lié à l'élastomère diénique par l'atome de silicium selon le procédé décrit plus haut.

L'invention a également pour objet un pneumatique qui incorpore dans au moins un de ses éléments constitutifs une composition de caoutchouc renforcée selon l'invention, et plus particulièrement des articles semi-finis d'un pneumatique qui comprennent cette composition.

En raison de l'hystérèse réduite qui caractérise une composition de caoutchouc renforcée selon l'invention à l'état vulcanisé, on notera qu'un pneumatique dont la bande de roulement comprend la composition présente une résistance au roulement avantageusement réduite. L'invention a donc également pour objet une bande de roulement de pneumatique qui est telle qu'elle comprend une composition de caoutchouc renforcée selon l'invention, réticulable ou réticulée, ou bien qui est telle qu'elle est constituée de cette composition.

Les caractéristiques précitées de la présente invention, ainsi que d'autres, seront mieux comprises à la lecture de la description suivante de plusieurs exemples de réalisation de l'invention, donnés à titre illustratif et non limitatif.

## EXEMPLES DE PREPARATION DE L'ELASTOMERE

Mesures et tests utilisés

Techniques expérimentales utilisées pour la caractérisation avant cuisson des polymères obtenus :

(a) On utilise la technique SEC (Size Exclusion Chromatography) qui permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE. Il n'y a pas de traitement particulier de l'échantillon de polymère avant analyse. Celui-ci est simplement solubilisé dans le solvant d'élution à une concentration d'environ 1 g/l. Puis la solution est filtrée sur filtre de porosité 0.45$\mu$m avant injection.

L'appareillage utilisé est une chaîne chromatographique « WATERS alliance ». Le solvant d'élution est soit le tétrahydrofurane, soit le tétrahydrofurane + 1%vol. de diisopropylamine + 1%vol. de triethylamine, le débit de 1 ml/min., la température du système de 35° C et la durée d'analyse de 30 min. On utilise un jeu de deux colonnes WATERS de dénomination commerciale « STYRAGEL HT6E ». Le volume injecté de la solution de l'échantillon de polymère est 100 $\mu$l. Le détecteur est un réfractomètre différentiel «WATERS 2410» et le logiciel d'exploitation des données chromatographiques est le système « WATERS EMPOWER».

Les masses molaires moyennes calculées sont relatives à une courbe d'étalonnage réalisée pour des SBR de microstructure suivante : 25 % massique de motifs type styrène, 23% massique de motifs type 1-2 et 50 % massique de motifs type 1-4 trans. La proportion massique de chaînes n'ayant pas subi le couplage est estimée par la décomposition mathématique en somme de gaussiennes des chromatogrammes obtenus par SEC (en faisant l'hypothèse que les coefficients de réponse du détecteur réfractométrique (dn/dc) des différentes espèces présentes sont identiques).

(b) Pour les polymères et les compositions de caoutchouc, les viscosités Mooney ML (1+4) à 100 °C sont mesurées selon la norme ASTM D 1646.

On utilise un consistomètre oscillant tel que décrit dans la norme ASTM D 1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en " unité Mooney " (UM, avec 1 UM = 0,83 N.m).

(c) Les températures de transition vitreuse Tg des polymères sont mesurées au moyen d'un calorimètre différentiel (" differential scanning calorimeter ").

(d) Les analyses RMN sont réalisées sur un spectromètre 500 MHz BRUKER équipé d'une sonde " large bande " BBIz 5 mm. Pour l'expérience RMN $^1H$ quantitative, la séquence utilise une impulsion 30° et un délai de répétition de 2 secondes. Les échantillons sont solubilisés dans le sulfure de carbone ($CS_2$). 100 μL de cyclohexane deutéré ($C_6D_{12}$) sont ajoutés pour le signal de lock.

Le spectre RMN $^1H$ permet de quantifier la fonction $(CH_3)_2Si$ par intégration du signal caractéristique des protons $SiCH_3$ autour de $\delta$ = 0 ppm.

Le spectre RMN 2D $^1H$-$^{29}Si$ permet de vérifier la nature de la fonction grâce aux valeurs de déplacements chimiques des noyaux Silicium et des protons au voisinage 2J (via 2 liaisons).

(e) La spectroscopie proche infrarouge (NIR) est utilisée pour déterminer quantitativement le taux massique de styrène dans l'élastomère ainsi que sa microstructure (répartition relative des unités butadiene 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

(f) Pour les polymères, la viscosité inhérente à 25 °C d'une solution de polymère à 0,1 g/dl dans le toluène, est mesurée à partir d'un polymère sec :

PRINCIPE :

La viscosité inhérente est déterminée par la mesure du temps d'écoulement t de la solution de polymère et du temps d'écoulement t0 du toluène, dans un tube capillaire.

Dans un tube Ubbelhode préalablement étalonné (diamètre du capillaire 0.46 mm, capacité 18 à 22 ml), placé dans un bain thermostaté à 25 ± 0,1 °C, le temps d'écoulement du toluène et celui de la solution de polymère à 0,1 g/dl sont mesurés.

La viscosité inhérente est obtenue par la relation suivante :

$$\eta_{inh} = \frac{1}{C}\ln\left[\frac{\left(t - \frac{H}{t}\right)}{\left(t_o - \frac{H}{t_o}\right)}\right]$$

avec :

| | |
|---|---|
| C | : concentration de la solution toluénique de polymère en g/dl ; |
| t | : temps d'écoulement de la solution toluénique de polymère en secondes ; |
| to | : temps d'écoulement du toluène en secondes ; |
| ηinh | : viscosité inhérente exprimée en dl/g. |
| H | : constante d'étalonnage du tube |

**Préparation du polymère A :** SBR non fonctionnel - **témoin**

Dans un réacteur de 70 litres, maintenu sous une pression d'azote d'environ 2 bars, contenant 46 kg de

méthylcyclohexane, sont injectés 2.00 kg de styrène et 4.70 kg de butadiène ainsi que 455 mL d'une solution de tetrahydrofurfuryl éther à 0,040 $mol.L^{-1}$ dans le méthylcyclohexane. Après neutralisation des impuretés dans la solution à polymériser par addition de n-butyllithium, est ajouté 375 mL de n-BuLi à 0,067 $mol.L^{-1}$ dans le méthylcyclohexane. La polymérisation est conduite à 40°C.

Après 110 min, le taux de conversion des monomères atteint 90%. Ce taux est déterminé par pesée d'un extrait séché à 110 °C, sous la pression réduite de 200 mmHg. 0,54 L d'une solution de méthanol à 0,15 $mol.L^{-1}$ dans le toluène est alors ajoutée. La viscosité inhérente, laquelle est mesurée à 25°C à 0,1 g/dl dans le toluène, est de 1.56 dl/g.

Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La viscosité ML du copolymère est de 53.

La masse moléculaire Mn de ce copolymère, déterminée par la technique SEC, est de 157 000 g/mol et l'Ip est de 1,11.

La microstructure de ce copolymère est déterminée par la méthode NIR :

Le taux massique de motifs 1,4-trans est de 22 %, celui de motifs 1,4-cis est de 19 % et celui de motifs 1,2 est de 59 % (chacun de ces trois taux se rapporte aux unités butadiène).
Le taux massique de styrène est de 28 %.

**Préparation du polymère B :** SBR fonctionnel SiOH bout de chaîne - **témoin**

Dans un réacteur de 70 litres, maintenu sous une pression d'azote d'environ 2 bars, contenant 45.1 kg de méthylcyclohexane, sont injectés 2.21 kg de styrène et 5.40 kg de butadiène ainsi que 184 mL d'une solution de tetrahydrofurfuryl éther à 0,10 $mol.L^{-1}$ dans le méthylcyclohexane. Après neutralisation des impuretés dans la solution à polymériser par addition de n-butyllithium, est ajouté 395 mL de n-BuLi à 0,094 $mol.L^{-1}$ dans le méthylcyclohexane. La polymérisation est conduite à 40°C.

Après 100 min, le taux de conversion des monomères atteint 91%. Ce taux est déterminé par pesée d'un extrait séché à 110 °C, sous la pression réduite de 200 mmHg. 186 mL de solution d'hexaméthylcyclotrisiloxane à 0.10 $mol.L^{-1}$ dans le méthylcyclohexane sont alors ajoutés. Après 30 min à 60°C, 0.68 L d'une solution de méthanol dans le toluène à 0,15 $mol.L^{-1}$ est alors ajoutée. Le polymère est ensuite soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La viscosité inhérente, laquelle est mesurée à 25 °C à 0,1 g/dl dans le toluène, est de 1.59 dl/g. La viscosité ML du copolymère est de 55.

La masse moléculaire Mn de ce copolymère, déterminée par la technique SEC, est de 156 000 g/mo et l'Ip est de 1,15.

La microstructure de ce copolymère est déterminée par la méthode NIR :

Le taux massique de motifs 1,4-trans est de 22 %, celui de motifs 1,4-cis est de 20 % et celui de motifs 1,2 est de 58 % (chacun de ces trois taux se rapporte aux unités butadiène).
Le taux massique de styrène est de 26 %.
Le taux de fonctions $(CH_3)_2Si$ déterminé par RMN $^1H$ pour ce copolymère est de 3,38 mmol/kg.

**Préparation du polymère C :** SBR couplé amino-alcoxysilane selon l'invention

Dans un réacteur de 70 litres, maintenu sous une pression d'azote d'environ 2 bars, contenant 45.3 kg de méthylcyclohexane, sont injectés 1.93 kg de styrène et 4.73 kg de butadiène ainsi que 605 mL d'une solution de tetrahydrofurfuryl éther à 0,040 $mol.L^{-1}$ dans le méthylcyclohexane. Après neutralisation des impuretés dans la solution à polymériser par addition de n-butyllithium, est ajouté 779 mL de n-BuLi à 0,067 $mol.L^{-1}$ dans le méthylcyclohexane. La polymérisation est conduite à 40°C.

Après 80 min, le taux de conversion des monomères atteint 90 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.04 dl/g. La masse moléculaire Mn de ce témoin, déterminée par

la technique SEC, est de 91300 g/mol, l'Ip est de 1.08. 1.61 L d'une solution de 3-(N,N-dimethylaminopropyl)trimethoxysilane de numéro CAS [2530-86-1] à 0,015 $mol.L^{-1}$ dans le méthylcyclohexane est ajoutée à la solution de polymère vivant. Après 20 min de réaction à 30°C, la solution est antioxydée par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote. La viscosité inhérente " finale " mesurée est de 1,56 dl/g. Le saut de viscosité, défini comme le rapport de ladite viscosité " finale " sur ladite viscosité " initiale ", est ici de 1,50. La viscosité ML du polymère ainsi couplé est de 53.

La masse moléculaire Mn de ce copolymère, déterminée par la technique SEC, est de 153000 g/mol et l'Ip est de 1.20. Le pourcentage massique de chaînes linéaires non couplées est d'environ 22 %.

La microstructure de ce copolymère est déterminée par la méthode NIR :

Le taux massique de motifs 1,4-trans est de 22 %, celui de motifs 1,4-cis est de 19 % et celui de motifs 1,2 est de 59 % (chacun de ces trois taux se rapporte aux unités butadiène).

Le taux massique de styrène est de 27 %.

**Préparation du polymère D :** SBR amino-alcoxysilane en bout de chaîne - **témoin**

Dans un réacteur de 10 litres, maintenu sous une pression d'azote d'environ 2 bars, contenant 5.09 kilogrammes de méthylcyclohexane, sont injectés 197 grammes de styrène et 531 grammes de butadiène ainsi que 0,60 mL de tetrahydrofurfuryl éther. Après neutralisation des impuretés dans la solution à polymériser par addition de s-butyllithium, sont ajoutés 3,43 mmol de s-BuLi. La polymérisation est conduite à 50°C. Après 37 min, le taux de conversion des monomères atteint 88%. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.60 dl/g. La masse moléculaire Mn de ce témoin, déterminée par la technique SEC, est de 147000 g/mol, l'Ip est de 1,10.

9.0 mL d'hexaméthylcyclotrisiloxane en solution à 0,13 $mol.L^{-1}$ dans le méthylcyclohexane sont alors ajoutés. Après 30 min à 60°C, sont injectés 11,2 mL d'une solution de 3-(N,N-dimethylaminopropyl)trimethoxysilane à 1.17 $mol.L^{-1}$ dans le méthylcyclohexane. Après 30 min de réaction à 60°C, 70 mL d'une solution de méthanol dans le toluène à 0,15 $mol.L^{-1}$ est alors ajoutée

Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. On sépare le copolymère ainsi traité de sa solution par une opération de stripping à la vapeur d'eau, puis on le sèche sur outil à cylindres à 100°C pendant 15 minutes.

La viscosité inhérente " finale " mesurée est de 1,70 dl/g. La viscosité ML du polymère est de 54.

La masse moléculaire Mn de ce copolymère, déterminée par la technique SEC, est de 158 000 g/mol et l'Ip est de 1,19. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population de chaînes linéaires couplées dans une proportion de 10% en masse.

La microstructure de ce copolymère est déterminée par la méthode NIR:

Le taux massique de motifs 1,4-trans est de 21 %, celui de motifs 1,4-cis est de 20 % et celui de motifs 1,2 est de 59 % (chacun de ces trois taux se rapporte aux unités butadiène).

Le taux massique de styrène est de 26 %.

**Préparation du polymère E :** SBR non fonctionnel - **témoin**

Dans un réacteur de 70 litres, maintenu sous une pression d'azote d'environ 2 bars, contenant 47 kg de méthylcyclohexane, sont injectés 3.57 kg de styrène et 3.17 kg de butadiène ainsi que 61 mL d'une solution de tetrahydrofurfuryl éther à 0,040 $mol.L^{-1}$ dans le méthylcyclohexane. Après neutralisation des impuretés dans la solution à polymériser par addition de n-butyllithium, est ajouté 210 mL de n-BuLi à 0,067 $mol.L^{-1}$ dans le méthylcyclohexane. La polymérisation est conduite à 50°C.

Après 80 min, le taux de conversion des monomères atteint 54 %. Ce taux est déterminé par pesée d'un extrait séché à 110 °C, sous la pression réduite de 200 mmHg.

0,32 L d'une solution de méthanol à 0,15 $mol.L^{-1}$ dans le toluène est alors ajoutée. La viscosité inhérente, laquelle est mesurée à 25 °C à 0,1 g/dl dans le toluène, est de 1.76 dl/g.

Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La viscosité ML du copolymère est de 57.

La masse moléculaire Mn de ce copolymère, déterminée par la technique SEC, est de 162 000 g/mol et l'Ip est de 1,12.

La microstructure de ce copolymère est déterminée par la méthode NIR :

Le taux massique de motifs 1,4-trans est de 45 %, celui de motifs 1,4-cis est de 31 % et celui de motifs 1,2 est de 24 % (chacun de ces trois taux se rapporte aux unités butadiène).
Le taux massique de styrène est de 28 %.

**Préparation du polymère F :** SBR fonctionnalisé SiOH en bout de chaîne - **témoin**

Dans un réacteur de 75 litres, maintenu sous une pression d'azote d'environ 2 bars, contenant 49,5 kg de méthylcyclohexane, sont injectés 2.14 kg de styrène et 5.00 kg de butadiène ainsi que 313 mL d'une solution de 1,1-diméthylpropylate de sodium à 0,037 mol.$L^{-1}$ dans le méthylcyclohexane. Après neutralisation des impuretés dans la solution à polymériser par addition de n-butyllithium, est ajouté 539 mL de n-BuLi à 0,065 mol.$L^{-1}$ dans le méthylcyclohexane. La polymérisation est conduite à 50°C.

Après 100 min, le taux de conversion des monomères atteint 91 %. Ce taux est déterminé par pesée d'un extrait séché à 110 °C, sous la pression réduite de 200 mmHg. 692 mL de solution d'hexaméthylcyclotrisiloxane à 0.025 mol.$L^{-1}$ dans le méthylcyclohexane sont alors ajoutés. Après 30 min à 60°C, 0.58 L d'une solution de méthanol dans le toluène à 0,15 mol.$L^{-1}$ est alors ajoutée. Le polymère est ensuite soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La viscosité inhérente, laquelle est mesurée à 25 °C à 0,1 g/dl dans le toluène, est de 1.69 dl/g. La viscosité ML du copolymère est de 57.

La masse moléculaire Mn de ce copolymère, déterminée par la technique SEC, est de 165000 g/mol et l'Ip est de 1,12.

Là microstructure de ce copolymère est déterminée par la méthode NIR :

Le taux massique de motifs 1,4-trans est de 41 %, celui de motifs 1,4-cis est de 33 % et celui de motifs 1,2 est de 26 % (chacun de ces trois taux se rapporte aux unités butadiène)..
Le taux massique de styrène est de 28 %.
Le taux de fonctions $(CH_3)_2Si$ déterminé par RMN $^1H$ pour ce copolymère est de 4.3 mmol/kg.

**Préparation du polymère G :** SBR couplé amino-alcoxysilane selon invention

Dans un réacteur de 70 litres, maintenu sous une pression d'azote d'environ 2 bars, contenant 46.0 kg de méthylcyclohexane, sont injectés 3.71 kg de styrène et 3.03 kg de butadiène ainsi que 206 mL d'une solution de tetrahydrofurfuryl éther à 0,065 mol.$L^{-1}$ dans le méthylcyclohexane. Après neutralisation des impuretés dans la solution à polymériser par addition de n-butyllithium, est ajouté 712 mL de n-BuLi à 0,050 mol.$L^{-1}$ dans le méthylcyclohexane. La polymérisation est conduite à 50°C. Après 65 min, le taux de conversion des monomères atteint 54%. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.04 dl/g. La masse moléculaire Mn de ce témoin, déterminée par la technique SEC, est de 87000 g/mol, l'Ip est de 1,07. 170 mL d'une solution de 3-(N,N-dimethylaminopropyl)trimethoxysilane de numéro CAS [2530-86-1] à 0,10 mol.$L^{-1}$ dans le méthylcyclohexane est ajoutée à la solution de polymère vivant. Après 30 min de réaction à 30°C, la solution est antioxydée par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote. La viscosité inhérente " finale " mesurée est de 1,61 dl/g. Le saut de viscosité, défini comme le rapport de ladite viscosité " finale " sur ladite viscosité " initiale est ici de 1,54. La viscosité ML du polymère ainsi couplé est de 57.

La masse moléculaire Mn de ce polymère, déterminée par la technique SEC, est de 160 000 g/mol et l'Ip est de 1,16. Le pourcentage massique de chaînes linéaires non couplées est d'environ 10 %.

La microstructure de ce copolymère est déterminée par la méthode NIR :

Le taux massique de motifs 1,4-trans est de 46 %, celui de motifs 1,4-cis est de 31 % et celui de motifs 1,2 est de 23 % (chacun de ces trois taux se rapporte aux unités butadiène).
Le taux massique de styrène est de 30 %.

**Préparation du polymère H :** SBR fonctionnalisé amino-alcoxysilane en bout de chaîne - **témoin**

Dans un réacteur de 10 litres, maintenu sous une pression d'azote d'environ 2 bars, contenant 5.09 kilogrammes de méthylcyclohexane, sont injectés 291 grammes de styrène et 437 grammes de butadiène ainsi que 3.9 mL de tétrahydrofurane. Après neutralisation des impuretés dans la solution à polymériser par addition de s-butyllithium, sont ajoutés 3,00 mmol de s-BuLi. La polymérisation est conduite à 50°C. Après 62 min, le taux de conversion des monomères atteint 76 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.7 dl/g. La masse moléculaire Mn de ce témoin, déterminée par la technique SEC, est de 142000 g/mol, l'Ip est de 1,11. 7.7 mL d'hexaméthylcyclotrisiloxane en solution à 0,13 $mol.L^{-1}$ dans le méthylcyclohexane sont alors ajoutés. Après 30 min à 60°C; sont injectés 13.9 mL d'une solution de 3-(N,N-dimethylaminopropyl)trimethoxysilane à 0.84 $mol.L^{-1}$ dans le méthylcyclohexane. Après 30 min de réaction à 60°C, 200 mL d'une solution de méthanol (3 équivalents par rapport au lithium) dans le toluène sont ajoutés. Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. On sépare le copolymère ainsi traité de sa solution par une opération de stripping à la vapeur d'eau, puis on le sèche sur outil à cylindres à 100°C pendant 15 minutes.

La viscosité inhérente " finale " mesurée est de 1,82 dl/g. La viscosité ML du polymère est de 52.

La masse moléculaire Mn de ce copolymère, déterminée par la technique SEC, est de 157 000 g/mol et l'Ip est de 1,18. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population de chaînes linéaires couplées dans une proportion de 8% en masse.

La microstructure de ce copolymère est déterminée par la méthode NIR:

Le taux massique de motifs 1,4-trans est de 48 %, celui de motifs 1,4-cis est de 28 % et celui de motifs 1,2 est de 24 % (chacun de ces trois taux se rapporte aux unités butadiène).
Le taux massique de styrène est de 29 %.

**Préparation du polymère 1 :** SBR couplé amino-alcoxysilane selon l'invention

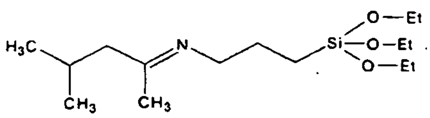

3-(1,3-dimethylbutylidene)aminopropyltriethoxysilane de numéro CAS [198567-47-4]

Dans un réacteur de 10 litres, maintenu sous une pression d'azote d'environ 2 bars, contenant 5.24 kilogrammes de méthylcyclohexane, sont injectés 209 grammes de styrène et 539 grammes de butadiène ainsi que 0,39 grammes de tetrahydrofurfuryl éther. Après neutralisation des impuretés dans la solution à polymériser par addition de n-butyllithium, sont ajoutés 6.36 mmol de n-BuLi. La polymérisation est conduite à 40°C.

Après 65 min, le taux de conversion des monomères atteint 90 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 0.98 dl/g. La masse moléculaire Mn de ce témoin, déterminée par la technique SEC, est de 83000 g/mol, l'Ip est de 1,07. 2.93 mmol de 3-(1,3-dimethylbutylidene)aminopropyltriethoxysilane de numéro CAS [198567-47-4] en solution dans 50 mL de méthylcyclohexane sont injectés. Après 4 heures de réaction à 40°C, 63 mL d'une solution de méthanol dans le toluène à 0,3 $mol.L^{-1}$ est alors ajoutée

Le polymère est alors soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. On sèche le copolymère ainsi préparé sous pression réduite à 60°C. La viscosité inhérente " finale " mesurée est de 1,66 dl/g. La viscosité ML du polymère ainsi couplé est de 50. Le saut de viscosité, défini comme le rapport de ladite viscosité " finale " sur ladite viscosité " initiale ", est ici de 1,7.

La masse moléculaire Mn de ce copolymère, déterminée par la technique SEC, est de 146000 g/mol et l'Ip est de 1,36.

La microstructure de ce copolymère est déterminée par la méthode NIR:

Le taux massique de motifs 1,4-trans est de 21 %, celui de motifs 1,4-cis est de 20 % et celui de motifs 1,2 est de 59 % (chacun de ces trois taux se rapporte aux unités butadiène).
Le taux massique de styrène est de 28 %.

**Préparation du polymère J** : SBR couplé amino-alcoxysilane selon l'invention

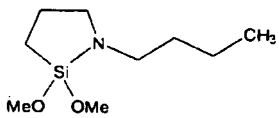

N-n-butyl-aza-2,2-dimethoxysilacyclopentane de numéro CAS [618914-44-6]

Dans un réacteur de 10 litres, maintenu sous une pression d'azote d'environ 2 bars, contenant 5.24 kilogrammes de méthylcyclohexane, sont injectés 209 grammes de styrène et 539 grammes de butadiène ainsi que 0,36 grammes de tetrahydrofurfuryl éther. Après neutralisation des impuretés dans la solution à polymériser par addition de n-butyllithium, sont ajoutés 5.91 mmol de n-BuLi. La polymérisation est conduite à 40°C.

Après 65 min, le taux de conversion des monomères atteint 93 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.11 dl/g. La masse moléculaire Mn de ce témoin, déterminée par la technique SEC, est de 89000 g/mol, l'Ip est de 1,08. 2.72 mmol de N-n-butyl-aza-2,2-dimethoxysilacyclopentane de numéro CAS [618914-44-6] en solution dans 50 mL de méthylcyclohexane sont injectés. Après 2 heures de réaction à 40°C, 60 mL d'une solution de méthanol dans le toluène à 0,3 $mol.L^{-1}$ est alors ajoutée

Le polymère est alors soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. On sèche le copolymère ainsi préparé sous pression réduite à 60°C. La viscosité inhérente " finale " mesurée est de 1,66 dl/g. La viscosité ML du polymère ainsi couplé est de 50. Le saut de viscosité, défini comme le rapport de ladite viscosité " finale " sur ladite viscosité " initiale ", est ici de 1,5.

La masse moléculaire Mn de ce copolymère, déterminée par la technique SEC, est de 151 000 g/mol et l'Ip est de 1,18.

La microstructure de ce copolymère est déterminée par la méthode NIR:

Le taux massique de motifs 1,4-trans est de 21 %, celui de motifs 1,4-cis est de 20 % et celui de motifs 1,2 est de 59 % (chacun de ces trois taux se rapporte aux unités butadiène).
Le taux massique de styrène est de 28 %.

**Préparation du polymère K :** SBR **couplé** amino-alcoxysilane selon l'invention

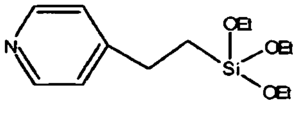

2-(4-pyridylethyl)triethoxysilane

Dans un réacteur de 10 litres, maintenu sous une pression d'azote d'environ 2 bars, contenant 5.24 kilogrammes

de méthylcyclohexane, sont injectés 209 grammes de styrène et 539 grammes de butadiène ainsi que 0,36 grammes de tetrahydrofurfuryl éther. Après neutralisation des impuretés dans la solution à polymériser par addition de s-butyllithium, sont ajoutés 5.91 mmol de s-BuLi. La polymérisation est conduite à 40°C.

Après 63 min, le taux de conversion des monomères atteint 93 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 0.99 dl/g. La masse moléculaire Mn de ce témoin, déterminée par la technique SEC, est de 85000 g/mol, l'Ip est de 1,07.

0,79 g de 2-(4-pyridylethyl)triethoxysilane en solution dans 50 mL de méthylcyclohexane sont injectés. Après 2 heures de réaction à 40°C, 60 mL d'une solution de méthanol dans le toluène à 0,3 $mol.L^{-1}$ est alors ajoutée

Le polymère est alors soumis à un traitement antioxydant par addition de 0,32 parties pour cent parties d'élastomères (pce) de 4,4'-méthylène-bis-2,6-tert-butylphénol et de 0,08 parties pour cent parties d'élastomères (pce) de N-(1,3-diméthylbutyl)-N'-phényl-p-phénylènediamine. On sèche le copolymère ainsi préparé sous pression réduite à 60°C.

La viscosité inhérente " finale " mesurée est de 1,64 dl/g. La viscosité ML du polymère ainsi couplé est de 52. Le saut de viscosité, défini comme le rapport de ladite viscosité " finale " sur ladite viscosité " initiale ", est ici de 1,7.

La masse moléculaire Mn de ce copolymère, déterminée par la technique SEC, est de 153000 g/mol et l'Ip est de 1,14. Le pourcentage massique de chaînes linéaires non couplées d'environ 10%.

La microstructure de ce copolymère est déterminée par la méthode NIR:

Le taux massique de motifs 1,4-trans est de 21 %, celui de motifs 1,4-cis est de 19 % et celui de motifs 1,2 est de 60 % (chacun de ces trois taux se rapporte aux unités butadiène).
Le taux massique de styrène est de 25 %.

**Préparation du polymère L :** SBR **couplé** amino-alcoxysilane selon l'invention

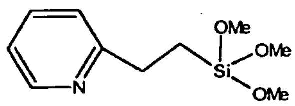

2-(trimethoxysilyl)pyridine de numéro CAS [27326-65-4]

Dans un réacteur de 10 litres, maintenu sous une pression d'azote d'environ 2 bars, contenant 5.54 kilogrammes de méthylcyclohexane, sont injectés 129 grammes de styrène et 333 grammes de butadiène ainsi que 0,36 grammes de tetrahydrofurfuryl éther. Après neutralisation des impuretés dans la solution à polymériser par addition de s-butyllithium, sont ajoutés 3.65 mmol de s-BuLi. La polymérisation est conduite à 40°C.

Après 71 min, le taux de conversion des monomères atteint 91 %. Ce taux est déterminé par pesée d'un extrait séché à 110 °C, sous la pression réduite de 200 mmHg. Un échantillon témoin est alors prélevé depuis le réacteur puis stoppé avec.un excès de méthanol par rapport au lithium. La viscosité inhérente (viscosité " initiale "), laquelle est mesurée à 25 °C à 0,1 g/dl dans le toluène, est de 1.01 dl/g. La masse moléculaire Mn de ce témoin, déterminée par la technique SEC, est de 88000 g/mol, l'Ip est de 1,08. 0,38 g de 2-(trimethoxysilyl)pyridine de numéro CAS [27326-65-4] en solution dans 50 mL de méthylcyclohexane sont injectés. Après 2 heures de réaction à 40°C, 60 mL d'une solution de méthanol dans le toluène à 0,18 $mol.L^{-1}$ est alors ajoutée

Le polymère est alors soumis à un traitement antioxydant par addition de 0,32 parties pour cent parties d'élastomères (pce) de 4,4'-méthylène-bis-2,6-tert-butylphénol et de 0,08 parties pour cent parties d'élastomères (pce) de N-(1,3-diméthylbutyl)-N'-phényl-p-phénylènediamine. On sèche le copolymère ainsi préparé sous pression réduite à 60°C.

La viscosité inhérente " finale " mesurée est de 1,65 dl/g. La viscosité ML du polymère ainsi couplé est de 56. Le saut de viscosité, défini comme le rapport de ladite viscosité " finale " sur ladite viscosité " initiale ", est ici de 1,6.

La masse moléculaire Mn de ce copolymère, déterminée par la technique SEC, est de 150000 g/mol et l'Ip est de 1,24. Le pourcentage massique de chaînes linéaires non couplées d'environ 20%.

La microstructure de ce copolymère est déterminée par la méthode NIR:

Le taux massique de motifs 1,4-trans est de 21 %, celui de motifs 1,4-cis est de 19 % et celui de motifs 1,2 est de 60 % (chacun de ces trois taux se rapporte aux unités butadiène).
Le taux massique de styrène est de 25 %.

**Exemples comparatifs de compositions de caoutchouc**

A) Mesures et tests utilisés

a) la viscosité Mooney ML (large) et MS (small) (1+4) à 100° C: mesurée selon la norme ASTM: D-1646, intitulée " Mooney " dans les tableaux,
(b) la dureté SHORE A: mesures effectuées selon la norme DIN 53505,
(c) les modules d'allongement à 300 % (MA 300), à 100 % (MA 100) et à 10 % (MA 10): mesures effectuées selon la norme ISO 37,
(d) l'indice de cassage Scott à 23°C: on détermine la contrainte à la rupture (FR) en MPa et l'allongement à la rupture (AR) en %. Toutes ces mesures de traction sont effectuées dans les conditions normales de température et d'hygrométrie selon la norme ISO 37.
(e) la perte à 60°C : une perte d'énergie à 60 °C par rebond à énergie imposée mesurée au sixième choc. La valeur, exprimée en %, est la différence entre l'énergie fournie et l'énergie restituée, rapportée à l'énergie fournie.
(f) Les propriétés dynamiques $\Delta$G* et tan($\delta$)max sont mesurées sur un viscoanalyseur (Metravib VA4000), selon la norme ASTM D 5992-96: On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10 Hz, dans les conditions normales de température (23°C) selon la norme ASTM D 1349-99. On effectue un balayage en amplitude de déformation crête-crête de 0,1% à 50% (cycle aller), puis de 50% à 0,1% (cycle retour). Les résultats exploités sont le module complexe de cisaillement dynamique (G*) et le facteur de perte tan $\delta$. Pour le cycle retour, on indique la valeur maximale de tan $\delta$ observée (tan($\delta$)max), ainsi que l'écart de module complexe ($\Delta$G*) entre les valeurs à 0,1% et 50% de déformation (effet Payne).

B) Les exemples

Exemple 1 :

| **Compositions comprenant soit un élastomère possédant une fonction amine alcoxysilane en milieu de chaîne selon l'invention, soit un élastomère non conforme à l'invention (Tg = -25°C)** |
|---|

Dans cet exemple, les trois élastomères SBR A, SBR C et SBR D ont été utilisés pour la préparation de compositions de caoutchouc A, C et D, comprenant chacune du noir de carbone à titre de charge renforçante.
Chacune de ces compositions A, C, et D présente la formulation suivante (exprimée en pce : parties pour cent parties d'élastomère) :

| | |
|---|---|
| Elastomère | 100 |
| N234 | 50 |
| Anti-oxydant (1) | 1 |
| Acide stéarique | 2 |
| ZnO | 3 |
| Sulfénamide (2) | 1.2 |
| Soufre | 1.2 |
| (1) = N-(1,3-diméthylbutyl)-N'-phényl-p-phénylènediamine,<br>(2) = N-cyclohexyl-2-benzothiazylsulfénamide, | |

Chacune des compositions suivantes est réalisée, dans un premier temps, par un travail thermo-mécanique, puis, dans un second temps de finition, par un travail mécanique.
On introduit successivement, dans un mélangeur interne de laboratoire de type "Banbury', dont la capacité est

de 400 $cm^3$, qui est rempli à 70% et dont la température initiale est d'environ 70°C, l'élastomère, la charge renforçante, l'antioxydant, l'acide stéarique et le monoxyde de zinc.

On conduit l'étape de travail thermo-mécanique pendant 4 à 5 minutes, jusqu'à une température maximale de tombée de 170°C environ.

Le premier temps précité de travail thermo-mécanique est ainsi réalisé, étant précisé que la vitesse moyenne des palettes lors de ce premier temps est de 60 t/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique). Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont consignés dans le tableau 1 ci-après.

Tableau 1:

| Composition | A | C | D |
|---|---|---|---|
| Elastomère | SBR A | SBR C | SBR D |
| ML 1+4 à 100°C (élastomère) | 53 | 53 | 54 |
| Propriétés à l'état non réticulé : | | | |
| MS 1+4 à 100°C (" Mooney mélange ") | 72 | 61 | 76 |
| Propriétés à l'état réticulé : | | | |
| Shore A | 73 | 70 | 71 |
| MA10 | 7.63 | 6.37 | 6.92 |
| MA100 | 2.61 | 2.18 | 2.54 |
| MA300 | 2.92 | 2.59 | 3.10 |
| MA300/MA100 | 1.12 | 1.19 | 1.22 |
| Indice de cassage Scott à 23°C | | | |
| Fr (MPa) | 20 | 19 | 21 |
| Ar (%) | 401 | 430 | 410 |
| Pertes 60°C (%) | 40 | 42 | 37 |
| Propriétés dynamiques en fonction de la déformation | | | |
| Delta G* (MPa) à 23°C | 5.66 | 3.60 | 5.32 |
| Tan (δ) max à 23°C | 0.382 | 0.344 | 0.367 |

On notera que la composition C selon l'invention présente une valeur de Mooney " mélange " inférieure à celle de la composition A à base d'un élastomère non fonctionnel et très nettement inférieure à celle de la composition D à base d'un élastomère qui comprend une fonction amine alcoxysilane en bout de chaîne. L'élastomère C qui comprend une fonction amine alcoxysilane en milieu de chaîne selon l'invention permet d'améliorer très nettement la mise en oeuvre à l'état non réticulé par rapport à l'élastomère fonctionnel amine alcoxysilane en bout de chaîne d'une part et permet d'améliorer la mise en oeuvre à l'état non réticulé par rapport à l'élastomère non fonctionnel d'autre part.

Concernant les propriétés à l'état réticulé, on notera que le rapport MA300/MA100 de la composition C selon l'invention est supérieur à celui de la composition A à base d'un élastomère non fonctionnel. L'élastomère C comprenant une fonction amine alcoxysilane en milieu de chaîne selon l'invention permet d'améliorer le renforcement par rapport à l'élastomère non fonctionnel.

Concernant les propriétés dynamiques, on notera que les valeurs de Delta G* et de tanδmax de la composition C selon l'invention sont inférieures à celles de la composition D à base d'un élastomère comprenant une fonction amine alcoxysilane en bout de chaîne. L'élastomère C portant une fonction amine alcoxysilane en milieu de chaîne selon l'invention permet d'améliorer les propriétés hystérétiques par rapport à l'élastomère D qui comprend une fonction amine alcoxysilane en bout de chaîne. Concernant les propriétés dynamiques, on notera que les valeurs de Delta G* et de tanδmax de la composition C selon l'invention sont très nettement inférieures à celles de la composition A à base d'un élastomère non fonctionnel. L'élastomère C comprenant une fonction amine alcoxysilane en milieu de chaîne selon l'invention permet d'améliorer très nettement les propriétés hystérétiques par rapport à l'élastomère non fonctionnel.

En d’autres termes, la composition C selon l’invention à base d’élastomère portant une fonction amine alcoxysilane en milieu de chaîne présente des propriétés de caoutchouterie à l’état non réticulé et à l’état réticulé qui sont améliorées par rapport à celles de la composition D à base d’un élastomère qui comprend une fonction amine alcoxysilane en bout de chaîne du fait d’une aptitude à la mise en oeuvre nettement améliorée et d’une hystérèse réduite.
En d’autres termes, la composition C selon l’invention à base d’élastomère comprenant une fonction amine alcoxysilane en milieu de chaîne présente des propriétés de caoutchouterie à l’état non réticulé et à l’état réticulé qui sont améliorées par rapport à celles de la composition A à base d’un élastomère non fonctionnel du fait d’une hystérèse nettement réduite et d’une aptitude à la mise en oeuvre améliorée.

Exemple 2 :

| **Compositions comprenant soit un élastomère possédant une fonction amine alcoxysilane en milieu de chaîne selon l’invention, soit un élastomère non conforme à l’invention (Tg = -48°C)** |
|---|

Dans cet exemple, les trois élastomères SBR E, SBR G et SBR H ont été utilisés pour la préparation de compositions de caoutchouc E, G et H, comprenant chacune du noir de carbone à titre de charge renforçante.
Chacune de ces compositions E, G, et H présente la formulation suivante (exprimée en pce : parties pour cent parties d’élastomère) :

| | |
|---|---|
| Elastomère | 100 |
| N234 | 50 |
| Anti-oxydant (1) | 1 |
| Acide stéarique | 2 |
| ZnO | 3 |
| Sulfénamide (2) | 1.2 |
| Soufre | 1.2 |
| (1) = N-(1,3-diméthylbutyl)-N’-phényl-p-phénylènediamine,<br>(2) = N-cyclohexyl-2-benzothiazylsulfénamide, | |

Chacune des compositions suivantes est réalisée, dans un premier temps, par un travail thermo-mécanique, puis, dans un second temps de finition, par un travail mécanique. On introduit successivement, dans un mélangeur interne de laboratoire de type "Banbury’, dont la capacité est de 400 $cm^3$, qui est rempli à 70% et dont la température initiale est d’environ 70°C, l’élastomère, la charge renforçante, l’antioxydant, l’acide stéarique et le monoxyde de zinc.
On conduit l’étape de travail thermo-mécanique pendant 4 à 5 minutes, jusqu’à une température maximale de tombée de 170°C environ.
Le premier temps précité de travail thermo-mécanique est ainsi réalisé, étant précisé que la vitesse moyenne des palettes lors de ce premier temps est de 60 t/min.
On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique). Les compositions ainsi obtenues sont ensuite calandrées, soit sous forme de plaques (d’une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.
La réticulation est effectuée à 150°C pendant 40 min.
Les résultats sont consignés dans le tableau 2 ci-après.

Tableau 2:

| Composition | E | G | H |
|---|---|---|---|
| Elastomère | SBR E | SBR G | SBR H |
| ML 1+4 à 100°C (élastomère) | 57 | 57 | 52 |
| Propriétés à l'état non réticulé : | | | |
| MS 1+4 à 100°C (" Mooney mélange ") | 83 | 73 | 82 |
| Propriétés à l'état réticulé : | | | |
| Shore A | 72 | 67 | 71 |
| MA10 | 7.20 | 5.98 | 6.67 |
| MA100 | 2.60 | 2.18 | 2.53 |
| MA300 | 3.13 | 2.82 | 3.23 |
| MA300/MA100 | 1.20 | 1.29 | 1.28 |
| Indice de cassage Scott à 23°C | | | |
| Fr (MPa) | 27 | 25 | 27 |
| Ar (%) | 509 | 507 | 475 |
| Pertes 60°C (%) | 33 | 33 | 31 |
| Propriétés dynamiques en fonction de la déformation | | | |
| Delta G* (MPa) à 23°C | 5.77 | 2.71 | 4.76 |
| Tan (δ) max à 23°C | 0.280 | 0.232 | 0.272 |

On notera que la composition G selon l'invention présente une valeur de Mooney " mélange "nettement inférieure à celle de la composition E à base d'un élastomère non fonctionnel et nettement inférieure à celle de la composition H à base d'un élastomère qui comprend une fonction amine alcoxysilane en bout de chaîne. L'élastomère G qui comprend une fonction amine alcoxysilane en milieu de chaîne selon l'invention permet d'améliorer très nettement la mise en oeuvre à l'état non réticulé par rapport à l'élastomère fonctionnel amine alcoxysilane en bout de chaîne d'une part et par rapport à l'élastomère non fonctionnel d'autre part.

Concernant les propriétés à l'état réticulé, on notera que le rapport MA300/MA100 de la composition G selon l'invention est supérieur à celui de la composition E à base d'un élastomère non fonctionnel. L'élastomère G comprenant une fonction amine alcoxysilane en milieu de chaîne selon l'invention permet d'améliorer le renforcement par rapport à l'élastomère non fonctionnel.

Concernant les propriétés dynamiques, on notera que les valeurs de Delta G* et de tanδmax de la composition G selon l'invention sont inférieures à celles de la composition H à base d'un élastomère comprenant une fonction amine alcoxysilane en bout de chaîne. L'élastomère G portant une fonction amine alcoxysilane en milieu de chaîne selon l'invention permet d'améliorer les propriétés hystérétiques par rapport à l'élastomère H qui comprend une fonction amine alcoxysilane en bout de chaîne. Concernant les propriétés dynamiques, on notera que les valeurs de Delta G* et de tanδmax de la composition G selon l'invention sont très nettement inférieures à celles de la composition E à base d'un élastomère non fonctionnel. L'élastomère G comprenant une fonction amine alcoxysilane en milieu de chaîne selon l'invention permet d'améliorer très nettement les propriétés hystérétiques par rapport à l'élastomère non fonctionnel.

En d'autres termes, la composition G selon l'invention à base d'élastomère portant une fonction amine alcoxysilane en milieu de chaîne présente des propriétés de caoutchouterie à l'état non réticulé et à l'état réticulé qui sont améliorées par rapport à celles de la composition H à base d'un élastomère qui comprend une fonction amine alcoxysilane en bout de chaîne du fait d'une aptitude à la mise en oeuvre nettement améliorée et d'une hystérèse réduite.

En d'autres termes, la composition G selon l'invention à base d'élastomère comprenant une fonction amine alcoxysilane en milieu de chaîne présente des propriétés de caoutchouterie à l'état non réticulé et à l'état réticulé qui sont améliorées par rapport à celles de la composition E à base d'un élastomère non fonctionnel du fait d'une hystérèse nettement réduite et d'une aptitude à la mise en oeuvre améliorée.

Exemple 3 :

**Compositions comprenant soit un élastomère possédant une fonction amine alcoxysilane en milieu de chaîne selon l'invention, soit un élastomère non conforme à l'invention**

(suite)

| (Tg = -25°C) |
|---|

Dans cet exemple, les trois élastomères SBR A, SBR B et SBR C ont été utilisés pour la préparation de compositions de caoutchouc A, B et C, comprenant chacune du noir de carbone et de la silice à titre de charge renforçante.

Chacune de ces compositions A, B et C présente la formulation suivante (exprimée en pce : parties pour cent parties d'élastomère) :

| | |
|---|---|
| Elastomère | 100 |
| N234 | 35 |
| Silice (1) | 35 |
| Huile (2) | 24.5 |
| X50S (3) | 5.6 |
| Diphénylguanidine | 0.7 |
| Anti-oxydant (4) | 1.9 |
| Cire anti-ozone " C32ST " | 1.5 |
| Acide stéarique | 2 |
| ZnO | 3 |
| Sulfénamide (5) | 1.3 |
| Soufre | 1.3 |
| (1) = Silice " Zeosil 1165 MP " de la société Rhodia,<br>(2) = Huile Tufflo 2000<br>(3) = Société Degussa<br>(4) = N-(1,3-diméthylbutyl)-N'-phényl-p-phénylènediamine,<br>(5)= N-cyclohexyl-2-benzothiazylsulfénamide, | |

Chacune des compositions suivantes est réalisée, dans un premier temps, par un travail thermo-mécanique, puis, dans un second temps de finition, par un travail mécanique. On introduit successivement, dans un mélangeur interne de laboratoire de type "Banbury', dont la capacité est de 400 $cm^3$, qui est rempli à 75% et dont la température initiale est d'environ 70°C, l'élastomère, la silice, l'huile, la diphénylguanidine, le silane sur noir, l'antioxydant, l'acide stéarique et la cire puis, environ 40 secondes plus tard, le noir de carbone, puis, environ trois minutes plus tard ou à 150°C le monoxyde de zinc.

On conduit l'étape de travail thermo-mécanique pendant 5 à 6 minutes, jusqu'à une température maximale de tombée de 160°C environ.

Le premier temps précité de travail thermo-mécanique est ainsi réalisé, étant précisé que la vitesse moyenne des palettes lors de ce premier temps est de 70 t/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 70 min.

Les résultats sont consignés dans le tableau 3 ci-après.

Tableau 3:

| Composition | A | B | C |
|---|---|---|---|
| Elastomère | SBR A | SBR B | SBR C |
| ML 1+4 à 100°C (élastomère) | 53 | 55 | 53 |

(suite)

| | | | |
|---|---|---|---|
| Propriétés à l'état non réticulé : | | | |
| MS 1+4 à 100°C (" Mooney mélange ") | 42 | 55 | 42 |
| Propriétés à l'état réticulé : | | | |
| Shore A | 70.6 | 65.5 | 64.9 |
| MA10 | 6.30 | 4.80 | 5.28 |
| MA100 | 2.40 | 2.27 | 2.47 |
| MA300 | 2.59 | 2.83 | 2.84 |
| MA300/MA100 | 1.08 | 1.25 | 1.15 |
| Indice de cassage Scott à 23°C | | | |
| Fr (MPa) | 17 | 19 | 18 |
| Ar (%) | 420 | 421 | 401 |
| Pertes 60°C (%) | 38 | 29 | 33 |
| Propriétés dynamiques en fonction de la déformation | | | |
| Delta G* (MPa) à 23°C | 7.50 | 3.82 | 2.91 |
| Tan (δ) max à 23°C | 0.421 | 0.358 | 0.334 |

On notera que la composition C selon l'invention présente une valeur de Mooney " mélange " équivalente à celle de la composition A à base d'un élastomère non fonctionnel et très nettement inférieure à celle de la composition B à base d'un élastomère qui comprend une fonction SiOH en bout de chaîne. L'élastomère C qui comprend une fonction amine alcoxysilane en milieu de chaîne selon l'invention permet d'améliorer très nettement la mise en oeuvre à l'état non réticulé par rapport à l'élastomère fonctionnel SiOH en bout de chaîne d'une part et présente une mise en oeuvre équivalente à l'état non réticulé par rapport à l'élastomère non fonctionnel d'autre part.

Concernant les propriétés à l'état réticulé, on notera que le rapport MA300/MA100 de la composition C selon l'invention est supérieur à celui de la composition A à base d'un élastomère non fonctionnel. L'élastomère C comprenant une fonction amine alcoxysilane en milieu de chaîne selon l'invention permet d'améliorer le renforcement par rapport à l'élastomère non fonctionnel.

Concernant les propriétés dynamiques, on notera que les valeurs de Delta G* et de tanδmax de la composition C selon l'invention sont inférieures à celles de la composition B à base d'un élastomère comprenant une fonction SiOH en bout de chaîne. L'élastomère C portant une fonction amine alcoxysilane en milieu de chaîne selon l'invention permet d'améliorer les propriétés hystérétiques par rapport à l'élastomère B qui comprend une fonction SiOH en bout de chaîne.

Concernant les propriétés dynamiques, on notera que les valeurs de Delta G* et de tanδmax de la composition C selon l'invention sont très nettement inférieures à celles de la composition A à base d'un élastomère non fonctionnel. L'élastomère C comprenant une fonction amine alcoxysilane en milieu de chaîne selon l'invention permet d'améliorer très nettement les propriétés hystérétiques par rapport à l'élastomère non fonctionnel.

En d'autres termes, la composition C selon l'invention à base d'élastomère portant une fonction amine alcoxysilane en milieu de chaîne présente des propriétés de caoutchouterie à l'état non réticulé et à l'état réticulé qui sont améliorées par rapport à celles de la composition B à base d'un élastomère qui comprend une fonction SiOH en bout de chaîne du fait d'une aptitude à la mise en oeuvre nettement améliorée et d'une hystérèse réduite.

En d'autres termes, la composition C selon l'invention à base d'élastomère comprenant une fonction amine alcoxysilane en milieu de chaîne présente des propriétés de caoutchouterie à l'état non réticulé et à l'état réticulé qui sont améliorées par rapport à celles de la composition A à base d'un élastomère non fonctionnel du fait d'une hystérèse nettement réduite à mise en oeuvre équivalente.

Exemple 4 :

**Compositions comprenant soit un élastomère possédant une fonction amine alcoxysilane en milieu de chaîne selon l'invention, soit un élastomère non conforme à l'invention (Tg = -48°C)**

Dans cet exemple, les trois élastomères SBR E, SBR F et SBR G ont été utilisés pour la préparation de

compositions de caoutchouc E, F et G, comprenant chacune du noir de carbone et de la silice à titre de charge renforçante.

Chacune de ces compositions E, F, et G présente la formulation suivante (exprimée en pce : parties pour cent parties d'élastomère) :

| | |
|---|---|
| Elastomère | 100 |
| N234 | 35 |
| Silice (1) | 35 |
| Huile (2) | 24.5 |
| X50S (3) | 5.6 |
| Diphénylguanidine | 0.7 |
| Anti-oxydant (4) | 1.9 |
| Cire anti-ozone " C32ST " | 1.5 |
| Acide stéarique | 2 |
| ZnO | 3 |
| Sulfénamide (5) | 1.3 |
| Soufre | 1.3 |
| (1) = Silice " Zeosil 1165 MP " de la société Rhodia,<br>(2) = Huile Tufflo 2000<br>(3) = Société Degussa<br>(4) = N-(1,3-diméthylbutyl)-N'-phényl-p-phénylènediamine,<br>(5)= N-cyclohexyl-2-benzothiazylsulfénamide, | |

Chacune des compositions suivantes est réalisée, dans un premier temps, par un travail thermo-mécanique, puis, dans un second temps de finition, par un travail mécanique. On introduit successivement, dans un mélangeur interne de laboratoire de type "Banbury', dont la capacité est de 400 $cm^3$, qui est rempli à 75% et dont la température initiale est d'environ 70°C, l'élastomère, la silice, l'huile, la diphénylguanidine, le silane sur noir, l'antioxydant, l'acide stéarique et la cire puis, environ 40 secondes plus tard, le noir, puis, environ trois minutes plus tard ou à 150°C le monoxyde de zinc.

On conduit l'étape de travail thermo-mécanique pendant 5 à 6 minutes, jusqu'à une température maximale de tombée de 160°C environ.

Le premier temps précité de travail thermo-mécanique est ainsi réalisé, étant précisé que la vitesse moyenne des palettes lors de ce premier temps est de 70 t/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique). Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 50 min.

Les résultats sont consignés dans le tableau 4 ci-après.

Tableau 4:

| Composition | E | F | G |
|---|---|---|---|
| Elastomère | SBR E | SBR F | SBR G |
| ML 1+4 à 100°C (élastomère) | 57 | 57 | 57 |
| Propriétés à l'état non réticulé : | | | |
| MS 1+4 à 100°C (" Mooney mélange ") | 49 | 74 | 54 |
| Propriétés à l'état réticulé : | | | |
| Shore A | 69.2 | 63.9 | 63.9 |

(suite)

| | | | |
|---|---|---|---|
| Propriétés à l'état réticulé : | | | |
| MA10 | 6.87 | 5.06 | 5.15 |
| MA100 | 2.15 | 2.11 | 2.17 |
| MA300 | 2.17 | 2.55 | 2.45 |
| MA300/MA100 | 1.01 | 1.21 | 1.13 |
| Indice de cassage Scott à 23°C | | | |
| Fr (MPa) | 21.6 | 22.3 | 20.4 |
| Ar (%) | 589 | 504 | 491 |
| Pertes 60°C (%) | 35.9 | 25.4 | 31.1 |
| Propriétés dynamiques en fonction de la déformation | | | |
| Delta G* (MPa) à 23°C | 7.33 | 3.21 | 2.54 |
| Tan (δ) max à 23°C | 0.339 | 0.261 | 0.249 |

On notera que la composition G selon l'invention présente une valeur de Mooney " mélange " très nettement inférieure à celle de la composition F à base d'un élastomère qui comprend une fonction SiOH en bout de chaîne.

Concernant les propriétés à l'état réticulé, on notera que le rapport MA300/MA100 de la composition G selon l'invention est supérieur à celui de la composition E à base d'un élastomère non fonctionnel. L'élastomère G comprenant une fonction amine alcoxysilane en milieu de chaîne selon l'invention permet d'améliorer le renforcement par rapport à l'élastomère non fonctionnel.

Concernant les propriétés dynamiques, on notera que les valeurs de Delta G* et de tanδmax de la composition G selon l'invention sont inférieures à celles de la composition F à base d'un élastomère comprenant une fonction SiOH en bout de chaîne. L'élastomère G portant une fonction amine alcoxysilane en milieu de chaîne selon l'invention permet d'améliorer les propriétés hystérétiques par rapport à l'élastomère F qui comprend une fonction SiOH en bout de chaîne.

Concernant les propriétés dynamiques, on notera que les valeurs de Delta G* et de tanδmax de la composition G selon l'invention sont très nettement inférieures à celles de la composition E à base d'un élastomère non fonctionnel. L'élastomère G comprenant une fonction amine alcoxysilane en milieu de chaîne selon l'invention permet d'améliorer très nettement les propriétés hystérétiques par rapport à l'élastomère non fonctionnel.

En d'autres termes, la composition G selon l'invention à base d'élastomère portant une fonction amine alcoxysilane en milieu de chaîne présente des propriétés de caoutchouterie à l'état non réticulé et à l'état réticulé qui sont améliorées par rapport à celles de la composition F à base d'un élastomère qui comprend une fonction SiOH en bout de chaîne du fait d'une aptitude à la mise en oeuvre nettement améliorée et d'une hystérèse réduite.

En d'autres termes, la composition G selon l'invention à base d'élastomère comprenant une fonction amine alcoxysilane en milieu de chaîne présente des propriétés de caoutchouterie à l'état réticulé qui sont améliorées par rapport à celles de la composition E à base d'un élastomère non fonctionnel du fait d'une hystérèse nettement réduite.

Exemple 5 :

**Compositions comprenant soit un élastomère possédant une fonction amine-alcoxysilane en milieu de chaîne selon l'invention, soit un élastomère non conforme à l'invention (Tg = -25°C)**

Dans cette série d'exemples, les élastomères SBR A, SBR B, SBR C, SBR D, SBR 1 SBR J, SBR K et SBR L ont été utilisés pour la préparation de compositions de caoutchouc A, B, C, D, I, J, K et L de type bande de roulement, comprenant chacune de la silice à titre de charge renforçante.

Chacune de ces compositions A, B, C, D, I, J, K et L présente la formulation suivante (exprimée en pce : parties pour cent parties d'élastomère) :

| | |
|---|---|
| Elastomère | 100 |
| Silice (1) | 80 |
| N234 | 1 |
| Huile MES (5) | 15 |
| Résine (6) | 15 |

(suite)

| | |
|---|---|
| Agent de liaison (2) | 6.4 |
| ZnO | 2.5 |
| Acide stéarique | 2 |
| Antioxydant (3) | 1.9 |
| Cire anti-ozone " C32ST " (7) | 1.5 |
| Diphénylguanidine | 1.5 |
| Soufre | 1.2 |
| Sulfénamide (4) | 2 |

Avec :
(1) = Silice " Zeosil 1165 MP " de la société Rhodia,
(2) = Agent de liaison " Si69 " de la société Degussa,
(3) = N-(1,3-diméthylbutyl)-N'-phényl-p-phénylènediamine,
(4) = N-cyclohexyl-2-benzothiazylsulfénamide,
(5) = "Catenex® SNR" de la société Shell,
(6) = Résine "Dercolyte L120" de la société DRT ou "Sylvagum TR7125C" de la société Arizona,
(7) = Cire anti-ozone de la Société Repsol

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 $cm^3$, qui est rempli à 70% et dont la température initiale est d'environ 90°C, l'élastomère, les deux tiers de la charge renforçante, l'agent de couplage et la diphénylguanidine, puis, environ une minute plus tard, le reste de la charge renforçante, l'huile MES, la résine, l'antioxydant, l'acide stéarique et la cire anti-ozone " C32ST " puis, environ deux minutes plus tard le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont consignés dans le tableau 5 ci-après.

Tableau 5 :

| Composition | A | B | C | D | I | J | K | L |
|---|---|---|---|---|---|---|---|---|
| Flastomère | SBR A | SBR B | SBR C | SBR D | SBR 1 | SBR J | SBR K | SBR L |
| ML (1+4) à 100°C (élastomère) | 53 | 55 | 53 | 54 | 50 | 50 | 52 | 56 |
| Propriétés à l'état non réticulé | | | | | | | | |
| ML (1+4) à 100°C (" Mooney mélange ") | 81 | 99 | 67 | 103 | 66 | 68 | 71 | 64 |
| Propriétés à l'état réticulé | | | | | | | | |
| Shore A | 70.9 | 66.2 | 63.6 | 65.8 | 64.9 | 62.8 | 61.0 | 62.6 |
| MA10 | 6.85 | 4.91 | 4.31 | 4.82 | 4.94 | 4.29 | 3.90 | 4.13 |
| MA100 | 2.48 | 2.46 | 2.47 | 2.65 | 2,62 | 2.50 | 2.22 | 2.38 |
| MA300 | 2.60 | 3.01 | 2.86 | 3.13 | 2.94 | 3.07 | 3.09 | 2.85 |
| MA300/MA100 | 1.05 | 1.22 | 1.16 | 1.18 | 1.12 | 1.23 | 1.40 | 1.20 |
| Indice de cassage Scott à 23°C | | | | | | | | |
| Fr (MPa) | 16.7 | 18.0 | | 18.9 | 16.3 | 15.2 | 15.7 | 14.9 |
| Ar (%) | 400 | 363 | 333 | 366 | 345 | 320 | 317 | 334 |

(suite)

| | | | | | | | | |
|---|---|---|---|---|---|---|---|---|
| <u>Propriétés à l'état réticulé</u> | | | | | | | | |
| Pertes 60°C (%) | 33.9 | 23.6 | 25.7 | 20.4 | 27.1 | 24.1 | 23.2 | 26.5 |
| Propriétés dynamiques en fonction de la déformation | | | | | | | | |
| Delta G* (MPa) à 23°C | 6.60 | 2.54 | 0.95 | 1.97 | 1.17 | 0.87 | 1.64 | 0.91 |
| Tan (δ) max à 23°C | 0.496 | 0.411 | 0.333 | 0.365 | 0.357 | 0.281 | 0.353 | 0.314 |

On notera que les compositions C, I, J, K et L selon l'invention présentent des valeurs de Mooney " mélange " qui sont inférieures à celle de la composition A à base d'un élastomère non fonctionnel. Les compositions C, I, J, K et L selon l'invention présentent des valeurs de Mooney " mélange " qui sont très nettement inférieures à celle de la composition B à base d'un élastomère qui comprend une fonction SiOH en bout de chaîne et à celle de la composition D à base d'un élastomère qui comprend une fonction amine-alcoxysilane en bout de chaîne. Les élastomères C, 1, J, K et L qui comprennent une fonction amine-alcoxysilane en milieu de chaîne selon l'invention permettent d'améliorer très nettement la mise en oeuvre à l'état non réticulé par rapport à l'élastomère fonctionnel SiOH en bout de chaîne et à l'élastomère fonctionnel amine-alcoxysilane en bout de chaîne d'une part et permet d'améliorer nettement la mise en oeuvre à l'état non réticulé par rapport à l'élastomère non fonctionnel d'autre part.

Concernant les propriétés à l'état réticulé, on notera que le rapport MA300/MA100 des compositions C, I, J, K et L selon l'invention sont nettement supérieurs à celui de la composition A à base d'un élastomère non fonctionnel. Les élastomères C, I, J, K et L qui comprennent une fonction amine-alcoxysilane en milieu de chaîne selon l'invention permettent d'améliorer le renforcement par rapport à l'élastomère non fonctionnel.

Le rapport MA300/MA100 des compositions C, I, J et L selon l'invention sont équivalents, voire supérieur pour la composition K, à celui des compositions B et D à base respectivement d'un élastomère fonctionnel SiOH en bout de chaîne et d'un élastomère fonctionnel amine-alcoxysilane en bout de chaîne. Les élastomères C, I, J, K et L qui comprennent une fonction amine-alcoxysilane en milieu de chaîne selon l'invention permettent au moins de conserver un niveau de renforcement équivalent à ceux des élastomères fonctionnels SiOH en bout de chaîne et amine-alcoxysilane en bout de chaîne, voire même de l'améliorer.

Concernant les propriétés dynamiques, on notera que les valeurs de Delta G* et de $\tan\delta_{max}$ des compositions C, I, J, K et L selon l'invention sont très nettement inférieures à celles de la composition A à base d'un élastomère non fonctionnel. Les élastomères C, I, J, K et L qui comprennent une fonction amine-alcoxysilane en milieu de chaîne selon l'invention permettent d'améliorer les propriétés hystérétiques par rapport à l'élastomère non fonctionnel A.

Concernant les propriétés dynamiques, on notera que les valeurs de Delta G* et de $\tan\delta_{max}$ des compositions C, I, J, K et L selon l'invention sont inférieures à celles des compositions B et D à base respectivement d'un élastomère fonctionnel SiOH en bout de chaîne et d'un élastomère fonctionnel amine-alcoxysilane en bout de chaîne. Les élastomères C, I, J, K et L qui comprennent une fonction amine-alcoxysilane en milieu de chaîne selon l'invention permettent d'améliorer les propriétés hystérétiques par rapport à l'élastomère B qui comprend une fonction SiOH en bout de chaîne d'une part et par rapport à l'élastomère D qui comprend une fonction amine-alcoxysilane en bout de chaîne d'autre part.

En d'autres termes, les compositions C, 1, J, K et L selon l'invention à base d'élastomères qui comprennent une fonction amine-alcoxysilane en milieu de chaîne présentent des propriétés de caoutchouterie à l'état non réticulé et à l'état réticulé qui sont améliorées par rapport à celles de la composition A à base d'un élastomère non fonctionnel du fait d'une hystérèse nettement réduite et d'une aptitude à la mise en oeuvre améliorée.

En d'autres termes, les compositions C, 1, J, K et L selon l'invention à base d'élastomères qui comprennent une fonction amine-alcoxysilane en milieu de chaîne présente des propriétés de caoutchouterie à l'état non réticulé et à l'état réticulé qui sont améliorées par rapport à celles des compositions B et D à base respectivement d'un élastomère fonctionnel SiOH en bout de chaîne et d'un élastomère fonctionnel amine-alcoxysilane en bout de chaîne du fait d'une aptitude à la mise en oeuvre très nettement améliorée et d'une hystérèse nettement réduite.

<u>Exemple 6 :</u>

| |
|---|
| **Compositions comprenant soit un élastomère possédant une fonction amine-alcoxysilane (diméthylaminopropyltriméthoxysilane) en milieu de chaîne selon l'invention, soit un élastomère non conforme à l'invention (Tg = -48°C)** |

Dans cet exemple, les quatre élastomères SBR E, SBR F, SBR G et SBR H ont été utilisés pour la préparation

de compositions de caoutchouc E, F, G et H de type bande de roulement, comprenant chacune de la silice à titre de charge renforçante.

Chacune de ces compositions E, F, G et H présente la formulation suivante (exprimée en pce : parties pour cent parties d'élastomère) :

| | |
|---|---|
| Elastomère | 100 |
| Silice (1) | 50 |
| N234 | 1 |
| Agent de liaison (2) | 4 |
| ZnO | 3 |
| Acide stéarique | 1.9 |
| Antioxydant (3) | 1.9 |
| Diphénylguanidine | 1 |
| Soufre | 1.5 |
| Sulfénamide (4) | 1.8 |

Avec :
(1) = Silice " Zeosil II 65 MP " de la société Rhodia,
(2) = Agent de liaison " Si69 " de la société Degussa,
(3) = N-(1,3-diméthylbutyl)-N'-phényl-p-phénylènediamine,
(4) = N-cyclohexyl-2-benzothiazylsulfénamide,

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 $cm^3$, qui est rempli à 70% et dont la température initiale est d'environ 90°C, l'élastomère, la charge renforçante, l'agent de couplage et la diphénylguanidine, puis, environ une minute plus tard, l'antioxydant, l'acide stéarique et le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont consignés dans le tableau 6 ci-après.

Tableau 6 :

| Composition | E | F | G | H |
|---|---|---|---|---|
| Elastomère | SBR E | SBR F | SBR G | SBR H |
| ML (1+4) à 100°C (élastomère) | 57 | 57 | 57 | 52 |
| Propriétés à l'état non réticulé | | | | |
| MS (1+4) à 100°C (" Mooney mélange ") | 66 | 96 | 67 | 87 |
| Propriétés à l'état réticulé | | | | |
| Shore A | 74.5 | 67.3 | 65.3 | 69.0 |
| MA10 | 8.32 | 5.84 | 5.25 | 6.35 |
| MA100 | 3.00 | 2.63 | 2.63 | 2.90 |
| MA300 | 2.73 | 3.72 | 3.58 | 3.84 |
| MA300/MA100 | 0.91 | 1.41 | 1.36 | 1.32 |
| Indice de cassage Scott à 23°C | | | | |

(suite)

| Composition | E | F | G | H |
|---|---|---|---|---|
| Fr (MPa) | 14.7 | 17.8 | 17.3 | 21.5 |
| Ar(%) | 304 | 322 | 318 | 358 |
| Pertes 60°C (%) | 23.0 | 13.2 | 14.5 | 13.1 |
| Propriétés dynamiques en fonction de la déformation | | | | |
| Delta G* (MPa) à 23°C | 4.15 | 1.01 | 0.36 | 0.97 |
| Tan (δ) max à 23°C | 0.210 | 0.124 | 0.106 | 0.122 |

On notera que la composition G selon l'invention présente une valeur de Mooney " mélange " qui est équivalente à celle de la composition E à base d'un élastomère non fonctionnel. La composition G selon l'invention présente une valeur de Mooney " mélange " qui est très nettement inférieure à celle de la composition F à base d'un élastomère qui comprend une fonction SiOH en bout de chaîne et à celle de la composition H à base d'un élastomère qui comprend une fonction amine-alcoxysilane en bout de chaîne. L'élastomère G qui comprend une fonction amine-alcoxysilane en milieu de chaîne selon l'invention permet d'améliorer très nettement la mise en oeuvre à l'état non réticulé par rapport à l'élastomère fonctionnel SiOH en bout de chaîne et à l'élastomère fonctionnel amine-alcoxysilane en bout de chaîne.

Concernant les propriétés à l'état réticulé, on notera que le rapport MA300/MA100 de la composition G selon l'invention est nettement supérieur à celui de la composition E à base d'un élastomère non fonctionnel. L'élastomère G qui comprend une fonction amine-alcoxysilane en milieu de chaîne selon l'invention permet d'améliorer le renforcement par rapport à l'élastomère non fonctionnel.

Le rapport MA300/MA100 de la composition G selon l'invention est équivalent à celui des compositions F et H à base respectivement d'un élastomère fonctionnel SiOH en bout de chaîne et d'un élastomère fonctionnel amine-alcoxysilane en bout de chaîne. L'élastomère G qui comprend une fonction amine-alcoxysilane en milieu de chaîne selon l'invention permet de conserver un niveau de renforcement équivalent à ceux des élastomères fonctionnels SiOH en bout de chaîne et amine-alcoxysilane en bout de chaîne.

Concernant les propriétés dynamiques, on notera que les valeurs de Delta G* et de $\tan\delta_{max}$ de la composition G selon l'invention sont très nettement inférieures à celles de la composition E à base d'un élastomère non fonctionnel. L'élastomère G qui comprend une fonction amine-alcoxysilane en milieu de chaîne selon l'invention permet d'améliorer les propriétés hystérétiques par rapport à l'élastomère non fonctionnel E.

Concernant les propriétés dynamiques, on notera que les valeurs de Delta G* et de $\tan\delta_{max}$ de la composition G selon l'invention sont inférieures à celles des compositions F et H à base respectivement d'un élastomère fonctionnel SiOH en bout de chaîne et d'un élastomère fonctionnel amine-alcoxysilane en bout de chaîne. L'élastomère G qui comprend une fonction amine-alcoxysilane en milieu de chaîne selon l'invention permet d'améliorer les propriétés hystérétiques par rapport à l'élastomère F qui comprend une fonction SiOH en bout de chaîne d'une part et par rapport à l'élastomère H qui comprend une fonction amine-alcoxysilane en bout de chaîne d'autre part.

En d'autres termes, la composition G selon l'invention à base d'élastomère qui comprend une fonction amine-alcoxysilane en milieu de chaîne présente des propriétés de caoutchouterie à l'état non réticulé et à l'état réticulé qui sont améliorées par rapport à celles de la composition E à base d'un élastomère non fonctionnel du fait d'une hystérèse nettement réduite et d'une aptitude à la mise en oeuvre conservée.

En d'autres termes, la composition G selon l'invention à base de l'élastomère qui comprend une fonction amine-alcoxysilane en milieu de chaîne présente des propriétés de caoutchouterie à l'état non réticulé et à l'état réticulé qui sont améliorées par rapport à celles des compositions F et H à base respectivement d'un élastomère fonctionnel SiOH en bout de chaîne et d'un élastomère fonctionnel amine-alcoxysilane en bout de chaîne du fait d'une aptitude à la mise en oeuvre très nettement améliorée et d'une hystérèse réduite.

## Revendications

1. Mélange élastomérique issu de la modification d'un élastomère diénique par un agent de couplage introduisant dans la chaîne élastomérique un groupe alcoxysilane portant une fonction amine tertiaire ou secondaire, **caractérisé en ce que** le mélange élastomérique comprend majoritairement l'élastomère diénique couplé par le groupe alcoxysilane portant une fonction amine tertiaire ou secondaire qui est lié à l'élastomère diénique par l'intermédiaire de l'atome de silicium.

2. Mélange élastomérique selon la revendication 1, **caractérisé en ce que** l'élastomère diénique couplé par le groupe alcoxysilane portant une fonction amine tertiaire ou secondaire, lié à l'élastomère diénique par l'intermédiaire de

l'atome de silicium répond à l'une des formules (I) à (III) suivantes:

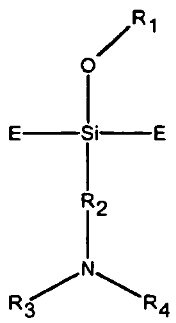

ou

Formule (I)

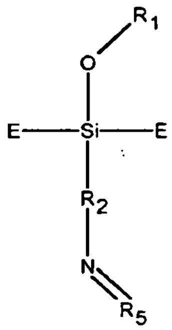

ou

Formule (II)

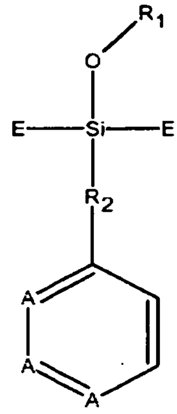

Formule (III)

dans lesquelles ,

- Le symbole E désigne un élastomère diénique,
- $R_1$ désigne un radical alkyle, linéaire ou ramifié, en $C_1$ - $C_{10}$, cycloalkyle en $C_5$-$C_{18}$, aryle en $C_6$ - $C_{18}$ ou aralkyle en $C_7$ - $C_{18}$
- $R_2$ est un dérivé hydrocarboné divalent, linéaire ou ramifié, d'alkyle en $C_1$ - $C_{10}$, d'aryle en $C_6$ - $C_{18}$ ou d'aralkyle en $C_7$ - $C_{18}$,
- dans la formule (I), $R_3$ et $R_4$, identiques ou différents, représentent un atome d'hydrogène ou un radical alkyl en $C_1$- $C_{10}$, sous réserve que lorsque l'un de $R_3$ et $R_4$ représente un atome d'hydrogène l'autre soit différent, ou alors $R_3$ et $R_4$ forment avec N auquel ils sont liés un hétérocycle contenant un atome d'azote et au moins un atome de carbone,
- dans la formule (II), $R_5$ représente un radical alkylidène, linéaire ou ramifié, en $C_1$- $C_{10}$,
- dans la formule (III), les symboles A désignent, indépendamment les uns des autres, un atome d'azote ou un atome de carbone, sous réserve que l'un au moins des symboles A désigne un atome d'azote.

3. Mélange élastomérique selon la revendication 2, **caractérisé en ce que** dans les formules (I), (II) et (111), R1 représente un radical méthyle ou éthyle.

4. Mélange élastomérique selon la revendication 2 ou 3, **caractérisé en ce que** dans les formules (I), (II) et (III), $R_2$ représente le radical propane-1,3-diyl.

5. Mélange élastomérique selon l'une des revendications 2 à 4, **caractérisé en ce que** l'élastomère diénique couplé par le groupe alcoxysilane portant une fonction amine tertiaire ou secondaire, lié à l'élastomère diénique par l'atome de silicium répond à la formule (I) dans laquelle $R_3$ et $R_4$, identiques ou différents, représentent un radical méthyle ou éthyle

6. Mélange élastomérique selon l'une des revendications 2 à 4, **caractérisé en ce que** l'élastomère diénique couplé par le groupe alcoxysilane portant une fonction amine tertiaire ou secondaire, lié à l'élastomère diénique par l'atome de silicium répond à la formule (II) dans laquelle $R_5$ représente un radical alkylidène, linéaire ou ramifié, en $C_4$-$C_6$.

7. Mélange élastomérique selon l'une des revendications 2 à 4, **caractérisé en ce que** l'élastomère diénique couplé par le groupe alcoxysilane portant une fonction amine tertiaire ou secondaire, lié à l'élastomère diénique par l'atome de silicium répond à la formule (III) dans laquelle un seul A désigne un atome d'azote et est situé en position méta ou para du cycle.

8. Mélange élastomérique selon l'une des revendications 1 à 7, **caractérisé en ce que** l'élastomère diénique modifié est issu d'un copolymère butadiène/ vinylaromatique préparé en solution.

9. Mélange élastomérique selon l'une des revendications 1 à 8, **caractérisé en ce qu'**il comprend au moins 75% en masse d'élastomère diénique couplé par le groupe amino-alcoxysilane, par rapport à la masse totale du mélange.

10. Procédé de préparation d'un mélange élastomérique tel que défini dans l'une quelconque des revendications 1 à 9, **caractérisé en ce qu'**il comprend :

    (i) la préparation d'un mélange élastomérique tel que défini dans l'une quelconque des revendications 1 à 9 qui consiste dans une première étape, à faire réagir le(s) monomère(s), éventuellement en présence ou non d'un solvant hydrocarboné inerte, avec un initiateur de polymérisation, et
    (ii) à faire réagir, dans une seconde étape, le polymère diénique vivant obtenu avec un agent de couplage introduisant dans la chaîne élastomérique un groupe alcoxysilane portant une fonction amine tertiaire ou secondaire,, avec un rapport molaire (agent de couplage / initiateur) allant de 0,3 à 0,8.

11. Composition de caoutchouc renforcée à base d'au moins une charge renforçante et une matrice élastomère comprenant au moins un mélange élastomérique tel que défini dans l'une quelconque des revendications 1 à 9.

12. Composition de caoutchouc selon la revendication 11, **caractérisée en ce que** ladite charge renforçante comprend une charge inorganique renforçante selon une fraction massique supérieure à 50 % et allant jusqu'à 100 %.

13. Procédé de préparation d'une composition selon la revendication 11 ou 12, **caractérisé en ce qu'**il comprend :

    (i) la préparation d'un mélange élastomérique tel que défini dans l'une quelconque des revendications 1 à 9 qui consiste dans une première étape, à faire réagir le(s) monomère(s), éventuellement en présence ou non d'un solvant hydrocarboné inerte, avec un initiateur de polymérisation, et à faire réagir, dans une seconde étape, le polymère diénique vivant obtenu avec un agent de couplage avec un rapport molaire (agent de couplage / initiateur) allant de 0,4 à 0,6, de manière à obtenir majoritairement un élastomère diénique couplé par un groupe alcoxysilane portant une fonction amine tertiaire ou secondaire lié à l'élastomère diénique par l'atome de silicium,
    (ii) la réalisation, à une température maximale comprise entre 130 °C et 200 °C, d'un premier temps de travail thermo-mécanique des constituants de la composition comprenant l'élastomère diénique couplé possédant un groupe alcoxysilane portant une fonction amine tertiaire ou secondaire en milieu de chaîne et une charge renforçante, à l'exception d'un système de réticulation, puis
    (iii) la réalisation, à une température inférieure à ladite température maximale dudit premier temps, d'un second temps de travail mécanique au cours duquel est incorporé ledit système de réticulation.

14. Bande de roulement de pneumatique, **caractérisée en ce qu'**elle comprend une composition de caoutchouc réticulable ou réticulée selon la revendication 11 ou 12.

15. Pneumatique, **caractérisé en ce qu'**il comporte une bande de roulement selon la revendication 14.

**Patentansprüche**

1. Elastomermischung, abgeleitet von der Modifizierung eines Dienelastomers mit einem Kopplungsmittel, das in die Elastomerkette eine Alkoxysilangruppe mit einer tertiären oder sekundären Aminfunktion einführt, **dadurch gekennzeichnet, dass** die Elastomermischung hauptsächlich das durch die Alkoxysilangruppe mit einer tertiären oder sekundären Aminfunktion, die über das Siliciumatom an das Dienelastomer gebunden ist, gekoppelte Dienelastomer umfasst.

2. Elastomermischung nach Anspruch 1, **dadurch gekennzeichnet, dass** das durch die Alkoxysilangruppe mit einer tertiären oder sekundären Aminfunktion, die über das Siliciumatom an das Dienelastomer gebunden ist, gekoppelte Dienelastomer einer der folgenden Formeln (I) bis (III) entspricht:

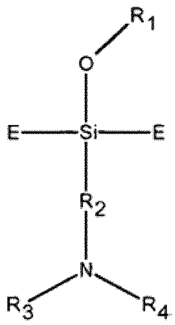 oder 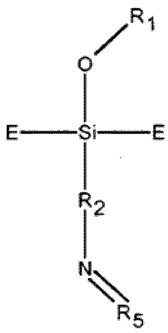 oder 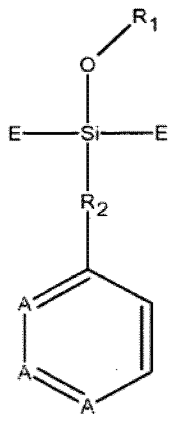

Formel (I) Formel (II) Formel (III)

worin

- das Symbol E für ein Dienelastomer steht,
- $R_1$ für einen linearen oder verzweigten $C_1$-$C_{10}$-Alkyl-, $C_5$-$C_{18}$-Cycloalkyl-, $C_6$-$C_{18}$-Aryl- oder $C_7$-$C_{18}$-Aralkylrest steht,
- $R_2$ für ein zweiwertiges lineares oder verzweigtes $C_1$-$C_{10}$-Alkyl-, $C_6$-$C_{18}$-Aryl- oder $C_7$-$C_{18}$-Aralkyl-Kohlenwasserstoffderivat steht,
- in der Formel (I) $R_3$ und $R_4$ gleich oder verschieden sind und für ein Wasserstoffatom oder einen $C_1$-$C_{10}$-Alkylrest stehen, mit der Maßgabe, dass dann, wenn einer der Reste $R_3$ und $R_4$ für ein Wasserstoffatom steht, der andere davon verschieden ist, oder auch $R_3$ und $R_4$ mit N, an das sie gebunden sind, einen Heterocyclus mit einem Stickstoffatom und mindestens einem Kohlenstoffatom bilden,
- in der Formel (II) $R_5$ für einen linearen oder verzweigten $C_1$-$C_{10}$-Alkylidenrest steht,
- in der Formel (III) die Symbole A unabhängig voneinander für ein Stickstoffatom oder ein Kohlenstoffatom stehen, mit der Maßgabe, dass mindestens eines der Symbole A für ein Stickstoffatom steht.

3. Elastomermischung nach Anspruch 2, **dadurch gekennzeichnet, dass** in den Formeln (I), (II) (III) $R_1$ für einen Methyl- oder Ethylrest steht.

4. Elastomermischung nach Anspruch 2 oder 3, **dadurch gekennzeichnet, dass** in den Formeln (I), (II) (III) $R_2$ für den Propan-1,3-diylrest steht.

5. Elastomermischung nach einem der Ansprüche 2 bis 4, **dadurch gekennzeichnet, dass** das durch die Alkoxysilangruppe mit einer tertiären oder sekundären Aminfunktion, die über das Siliciumatom an das Dienelastomer gebunden ist, gekoppelte Dienelastomer der Formel (I) entspricht, worin $R_3$ und $R_4$ gleich oder verschieden sind und für einen Methyl- oder Ethylrest stehen.

6. Elastomermischung nach einem der Ansprüche 2 bis 4, **dadurch gekennzeichnet, dass** das durch die Alkoxysilangruppe mit einer tertiären oder sekundären Aminfunktion, die über das Siliciumatom an das Dienelastomer gebunden ist, gekoppelte Dienelastomer der Formel (II) entspricht, worin $R_5$ für einen linearen oder verzweigten $C_4$-$C_6$-Alkylidenrest steht.

7. Elastomermischung nach einem der Ansprüche 2 bis 4, **dadurch gekennzeichnet, dass** das durch die Alkoxysilangruppe mit einer tertiären oder sekundären Aminfunktion, die über das Siliciumatom an das Dienelastomer gebunden ist, gekoppelte Dienelastomer der Formel (III) entspricht, worin ein einziges A für ein Stickstoffatom steht und sich in der meta- oder para-Position des Rings befindet.

8. Elastomermischung nach einem der Ansprüche 1 bis 7, **dadurch gekennzeichnet, dass** sich das modifizierte Dienelastomer von einem in Lösung hergestellten Butadien/Vinylaromat-Copolymer ableitet.

9. Elastomermischung nach einem der Ansprüche 1 bis 8, **dadurch gekennzeichnet, dass** sie mindestens 75 Gew.-% durch die Aminoalkoxysilangruppe gekoppeltes Dienelastomer, bezogen auf das Gesamtgewicht der Mischung,

umfasst.

**10.** Verfahren zur Herstellung einer Elastomermischung gemäß einem der Ansprüche 1 bis 9, **dadurch gekennzeichnet, dass** es Folgendes umfasst:

(i) die Herstellung einer Elastomermischung gemäß einem der Ansprüche 1 bis 9, bei der man in einem ersten Schritt das Monomer bzw. die Monomere gegebenenfalls in Gegenwart eines inerten Kohlenwasserstoff-Lösungsmittels mit einem Polymerisationsinitiator umsetzt und
(ii) in einem zweiten Schritt das erhaltene lebende Dienpolymer mit einem Kopplungsmittel, das in die Elastomerkette eine Alkoxysilangruppe mit einer tertiären oder sekundären Aminfunktion einführt, bei einem Molverhältnis (Kopplungsmittel/Initiator) im Bereich von 0,3 bis 0,8 umsetzt.

**11.** Verstärkte Kautschukzusammensetzung auf Basis von mindestens einem verstärkenden Füllstoff und einer Elastomermatrix, die mindestens eine Elastomermischung gemäß einem der Ansprüche 1 bis 9 umfasst.

**12.** Kautschukzusammensetzung nach Anspruch 11, **dadurch gekennzeichnet, dass** der verstärkende Füllstoff einen verstärkenden anorganischen Füllstoff in einem Gewichtsanteil von mehr als 50% bis 100% umfasst.

**13.** Verfahren zur Herstellung einer Zusammensetzung nach Anspruch 11 oder 12, **dadurch gekennzeichnet, dass** es Folgendes umfasst:

(i) die Herstellung einer Elastomermischung gemäß einem der Ansprüche 1 bis 9, bei der man in einem ersten Schritt das Monomer bzw. die Monomere gegebenenfalls in Gegenwart eines inerten Kohlenwasserstoff-Lösungsmittels mit einem Polymerisationsinitiator umsetzt und in einem zweiten Schritt das erhaltene lebende Dienpolymer mit einem Kopplungsmittel bei einem Molverhältnis (Kopplungsmittel/Initiator) im Bereich von 0,4 bis 0,6 umsetzt, so dass man hauptsächlich ein durch die Alkoxysilangruppe mit einer tertiären oder sekundären Aminfunktion, die über das Siliciumatom an das Dienelastomer gebunden ist, gekoppeltes Dienelastomer erhält,
(ii) die Durchführung eines ersten Schritts der thermomechanischen Bearbeitung der Bestandteile der Zusammensetzung bei einer Maximaltemperatur zwischen 130°C und 200°C, die das durch die Alkoxysilangruppe mit einer tertiären oder sekundären Aminfunktion, in der Kettenmitte gekoppelte Dienelastomer und einen verstärkenden Füllstoff umfasst, mit Ausnahme des Vernetzungssystems und dann
(iii) die Durchführung eines zweiten Schritts der mechanischen Bearbeitung bei einer Temperatur, die unter der Maximaltemperatur des ersten Schritts liegt, in dessen Verlauf das Vernetzungssystem eingearbeitet wird.

**14.** Reifenlauffläche, **dadurch gekennzeichnet, dass** sie eine vernetzbare oder vernetzte Kautschukzusammensetzung nach Anspruch 11 oder 12 umfasst.

**15.** Reifen, **dadurch gekennzeichnet, dass** er eine Lauffläche nach Anspruch 14 umfasst.

## Claims

**1.** Elastomer mixture resulting from the modification of a diene elastomer by a coupling agent that introduces, into the elastomer chain, an alkoxysilane group bearing a tertiary or secondary amine functional group, **characterized in that** the elastomer mixture predominantly comprises the diene elastomer coupled by the alkoxysilane group bearing a tertiary or secondary amine functional group which is bonded to the diene elastomer through the silicon atom.

**2.** Elastomer mixture according to Claim 1, **characterized in that** the diene elastomer coupled by the alkoxysilane group bearing a tertiary or secondary amine functional group, bonded to the diene elastomer through the silicon atom corresponds to one of the formulae (I) to (III) below:

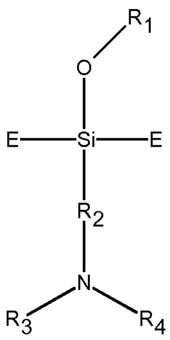 or 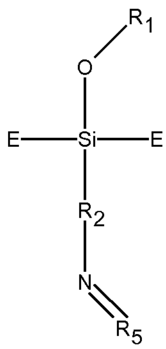 or 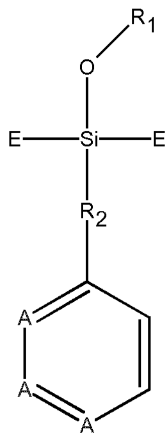

Formula (I) Formula (II) Formula (III)

in which:

- the symbol E denotes a diene elastomer;
- $R_1$ denotes a linear or branched, $C_1$-$C_{10}$ alkyl radical, a $C_5$-$C_{18}$ cycloalkyl radical, a $C_6$-$C_{18}$ aryl radical or a $C_7$-$C_{18}$ aralkyl radical;
- $R_2$ is a linear or branched, divalent, hydrocarbon-based $C_1$-$C_{10}$ alkyl, $C_6$-$C_{18}$ aryl or $C_7$-$C_{18}$ aralkyl derivative;
- in formula (I), $R_3$ and $R_4$, which are identical or different, represent a hydrogen atom or a $C_1$-$C_{10}$ alkyl radical, on condition that when one of $R_3$ and $R_4$ represents a hydrogen atom the other is different, or else $R_3$ and $R_4$ form, with N to which they are bonded, a heterocycle containing a nitrogen atom and at least one carbon atom;
- in formula (II), $R_5$ represents a linear or branched, $C_1$-$C_{10}$ alkylidene radical;
- in formula (III), the symbols A denote, independently of one another, a nitrogen atom or a carbon atom, on condition that at least one of the symbols A denotes a nitrogen atom.

**3.** Elastomer mixture according to Claim 2, **characterized in that**, in the formulae (I), (II) and (III), R1 represents a methyl or ethyl radical.

**4.** Elastomer mixture according to Claim 2 or 3, **characterized in that**, in the formulae (I), (II) and (III), $R_2$ represents the propane-1,3-diyl radical.

**5.** Elastomer mixture according to one of Claims 2 to 4, **characterized in that** the diene elastomer coupled by the alkoxysilane group bearing a tertiary or secondary amine functional group, bonded to the diene elastomer by the silicon atom corresponds to the formula (I) in which $R_3$ and $R_4$, which are identical or different, represent a methyl or ethyl radical.

**6.** Elastomer mixture according to one of Claims 2 to 4, **characterized in that** the diene elastomer coupled by the alkoxysilane group bearing a tertiary or secondary amine functional group, bonded to the diene elastomer by the silicon atom corresponds to the formula (II) in which $R_5$ represents a linear or branched, $C_4$-$C_6$ alkylidene radical.

**7.** Elastomer mixture according to one of Claims 2 to 4, **characterized in that** the diene elastomer coupled by the alkoxysilane group bearing a tertiary or secondary amine functional group, bonded to the diene elastomer by the silicon atom corresponds to the formula (III) in which a single A denotes a nitrogen atom and is located in the meta or para position of the ring.

**8.** Elastomer mixture according to one of Claims 1 to 7, **characterized in that** the modified diene elastomer is derived from a butadiene/vinyl aromatic copolymer prepared in solution.

**9.** Elastomer mixture according to one of Claims 1 to 8, **characterized in that** it comprises at least 75% by weight of diene elastomer coupled by the aminoalkoxysilane group, relative to the total weight of the mixture.

**10.** Process for preparing an elastomer mixture as defined in any one of Claims 1 to 9, **characterized in that** it comprises:

(i) the preparation of an elastomer mixture as defined in any one of Claims 1 to 10 which consists, in a first stage, in reacting the monomer(s) optionally in the presence or absence of an inert hydrocarbon solvent, with a polymerization initiator, and
(ii) in reacting, in a second stage, the living diene polymer obtained with a coupling agent that introduces, into the elastomer chain, an alkoxysilane group bearing a tertiary or secondary amine functional group, with a molar ratio (coupling agent/initiator) ranging from 0.3 to 0.8.

**11.** Reinforced rubber composition based on at least one reinforcing filler and an elastomer matrix comprising at least one elastomer mixture as defined in any one of Claims 1 to 9.

**12.** Rubber composition according to Claim 11, **characterized in that** said reinforcing filler comprises a reinforcing inorganic filler in a weight fraction greater than 50% and ranging up to 100%.

**13.** Process for preparing a composition according to Claim 11 or 12, **characterized in that** it comprises:

(i) the preparation of an elastomer mixture as defined in any one of Claims 1 to 10 which consists, in a first stage, in reacting the monomer(s), optionally in the presence or absence of an inert hydrocarbon solvent, with a polymerization initiator, and in reacting, in a second stage, the living diene polymer obtained with a coupling agent with a molar ratio (coupling agent/initiator) ranging from 0.4 to 0.6, so as to obtain predominantly a diene elastomer coupled by an alkoxysilane group bearing a tertiary or secondary amine functional group which is bonded to the diene elastomer by the silicon atom,
(ii) carrying out, at a maximum temperature of between 130°C and 200°C, a first step of thermomechanical working of the constituents of the composition comprising the coupled diene elastomer having an alkoxysilane group bearing a tertiary or secondary amine functional group in the middle of the chain and a reinforcing filler, with the exception of a crosslinking system, then
(iii) carrying out, at a temperature below said maximum temperature of said first step, a second step of mechanical working during which said crosslinking system is incorporated.

**14.** Tyre tread, **characterized in that** it comprises a crosslinkable or crosslinked rubber composition according to Claim 11 or 12.

**15.** Tyre, **characterized in that** it comprises a tread according to Claim 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0590491 A
- EP 0593049 A
- US 5066721 A
- EP 0299074 A
- EP 0992537 A
- US 5015692 A
- EP 0341496 A
- US 20050203251 A
- JP 2001158834 B
- JP 2001158835 B
- JP 2001158836 B
- JP 2001158837 B
- JP 2005232367 B
- JP 2001131230 B
- JP 2001131340 B
- EP 1113024 A
- JP 2001131343 B
- JP 2001131344 B
- JP 2001131345 B
- JP 2005171034 B
- WO 2006076629 A
- WO 9736724 A
- WO 9916600 A
- WO 2006069792 A
- WO 2006069793 A
- WO 2008003434 A
- WO 2008003435 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A
- WO 2005087859 A
- WO 2006061064 A
- WO 2007017060 A


### Littérature non-brevet citée dans la description


- **VILMIN, F. ; DUSSAP, C. ; COSTE, N.** *Applied Spectroscopy,* 2006, vol. 60, 619-29